# EUROPEAN PATENT SPECIFICATION

(11) **EP 4 268 538 B1**
(45) Date of publication and mention of the grant of the patent: **23.10.2024**
(21) Application number: 22702099.7
(22) Date of filing: 11.01.2022
(51) Int. Cl.: H04W 76/27, H04W 74/08, H04W 88/08

(54) **MANAGING EARLY DATA COMMUNICATION**
VERWALTUNG FRÜHER DATENKOMMUNIKATIONEN
GESTION DE COMMUNICATION DE DONNÉES PRÉCOCE

(30) Priority: 14.01.2021 US 202163199658 P; 17.02.2021 US 202163150199 P
(43) Date of publication of application: 01.11.2023
(73) Proprietor: Google LLC, Mountain View, CA 94043 (US)
(72) Inventor: WU, Chih-Hsiang, Mountain View, CA 94043 (US)
(74) Representative: Marks & Clerk GST
(86) International application number: PCT/US2022/011932
(87) International publication number: WO 2022/155115

(56) References cited:
- EP-A1- 3 927 106
- WO-A1-2018/031327
- WO-A1-2018/064367
- WO-A1-2020/032659
- WO-A1-2020/036460
- WO-A1-2020/119546
- WO-A1-2020/166817
- WO-A1-2020/200118
- US-A1- 2018 279 262
- US-A1- 2018 324 869

## Description

### FIELD OF THE DISCLOSURE

This disclosure relates generally to wireless communications and, more particularly, to communication of uplink and/or downlink data at a user equipment (UE) when the UE operates in an inactive or idle state associated with a protocol for controlling radio resources. The invention generally relates to a method implemented in a distributed unit of a distributed base station for managing early data transmission, and to a distributed unit of a distributed base station to implement such a method.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Generally speaking, a base station operating a cellular radio access network (RAN) communicates with a user equipment (UE) using a certain radio access technology (RAT) and multiple layers of a protocol stack. For example, the physical layer (PHY) of a RAT provides transport channels to the Medium Access Control (MAC) sublayer, which in turn provides logical channels to the Radio Link Control (RLC) sublayer, and the RLC sublayer in turn provides data transfer services to the Packet Data Convergence Protocol (PDCP) sublayer. The Radio Resource Control (RRC) sublayer is disposed above the PDCP sublayer.

The RRC sublayer specifies the RRC_IDLE state, in which a UE does not have an active radio connection with a base station; the RRC_CONNECTED state, in which the UE has an active radio connection with the base station; and the RRC_INACTIVE to allow a UE to more quickly transition back to the RRC_CONNECTED state due to Radio Access Network (RAN)-level base station coordination and RAN-paging procedures. In some cases, the UE in the RRC_IDLE or RRC_INACTIVE state has only one, relatively small packet to transmit. In these cases, the UE is in the RRC_IDLE or RRC _INACTIVE state can perform an early data transmission without transitioning to the RRC _CONNECTED state, e.g., by using techniques as specified in section 7.3 in 3GPP specification 36.300 v16.4.0.

However, implementing early data transmission techniques present several challenges. For example, existing early data transmission procedures were developed for LTE networks, which do not utilize the distributed base station architecture introduced for 5G New Radio (NR). Accordingly, it is not clear how a distributed base station including a central unit (CU) and a distributed unit (DU) should support early data communication with a UE.

Further, in some cases, a RAN may attempt to configure the UE to use a number of components (e.g., hardware, firmware, and/or software components) that exceeds the capabilities of the UE while the UE operates in the inactive state and/or that causes the UE to consume power above levels preferred for inactive state operation.

We refer to WO 2020/166817 A1 (Seokjung Kim et al.; published August 20, 2020) relating to Early Data Transmission in Cu-DU Split, and specifically disclosing transmitting a radio resource control (RRC) connection resume request message to a control plane (CP) of central unit (CU) of the network node, receiving information informing that downlink (DL) data exists from the CP, receiving DL data from a user plane (UP) of the CU, transmitting the DL data to a wireless device in response to the information, upon receiving the DL data, and releasing transmission resources after transmitting the DL data. Furthermore, UE initiates EDT and transmits UL user data multiplexed with the RRC resume request message to the serving DU, which sends to the last serving CU-CP an initial UL RRC message transfer message including the RRC resume request message. The last serving CU-CP may send the UE context setup request message including the stored F1 UL TEIDs to create the UE context in the DU. The DU may then forward the UL data to the CU-UP.

### SUMMARY

According to the present invention, there is provided a method implemented in a distributed unit of a distributed base station for managing early data transmission, in accordance with claim 1. There is further provided a distributed unit of a distributed base station including processing hardware and configured to implement the method, in accordance with claim 10. Preferred embodiments are defined by the dependent claims.

### BRIEF DESCRIPTION OF THE DRAWINGS

Fig. 1A is a block diagram of an example wireless communication system in which a user device and a base station of this disclosure can implement the techniques of this disclosure for reducing latency in data communication;
Fig. 1B is a block diagram of an example base station in which a centralized unit (CU) and a distributed unit (DU) can operate in the system of Fig. 1A;
Fig. 2 is a block diagram of an example protocol stack according to which the UE of Fig. 1A communicates with base stations;
Figs. 3A-B are messaging diagrams of example procedures for communicating one or multiple data packets between a UE and a RAN including a CU and a DU when a radio connection between the UE and the RAN is inactive;
Figs. 4A-C are messaging diagrams of example procedures for communicating one or multiple segments of a data packet between a UE and a RAN including a CU and a DU when a radio connection between the UE and the RAN is inactive;
Figs. 5A-B are messaging diagrams of additional example procedures for communicating one or multiple data packets between a UE and a RAN including a CU, a DU and a base station when a radio connection between the UE and the RAN is inactive;
Figs. 6A-B are messaging diagrams of example procedures for using communicating one or multiple data packets with a radio link control (RLC) protocol between a UE and a DU of a base station including the DU and a CU when a radio connection between the UE and the base station is inactive;
Figs. 7-10 are flow diagrams of example methods for processing early data transmission of data from a UE, which can be implemented in a DU of a base station in the RAN of Fig. 1A;
Figs. 11-12 are flow diagrams of example methods for processing early data transmissions of segments of data from a UE, which can be implemented in a DU of a base station in the RAN of Fig. 1A;
Fig. 13 is a flow diagram of an example method for processing a DU to CU interface message including early data transmission of data of a UE from a DU, which can be implemented in a CU of a base station in the RAN of Fig. 1A
Fig. 14 is a flow diagram of an example method for determining to perform a UE Context Setup or Modification Procedure or a UE Context Release procedure with a DU for a UE depending on whether the UE has subsequent data to communicate with the RAN, which can be implemented in a CU of a base station in the RAN of Fig. 1A;
Fig. 15 is a flow diagram of an example method for determining whether to establish or reestablish an RLC entity when performing an early data transmission procedure with a RAN, which can be implemented in the UE of Fig. 1A; and
Fig. 16 is a flow diagram of an example method for determining whether to instruct the UE to reestablish an RLC entity for communicating one or multiple data packets with an RLC protocol, which can be implemented in a CU or a base station in the RAN of Fig. 1A;
Fig. 17 is a flow diagram of an example method for enabling different counts of HARQ processes for early data transmissions and non-early data transmissions, respectively, which can be implemented in a base station or a DU of the base station in the RAN of Fig. 1A;
Fig. 18 is a flow diagram of an example method for using different counts of HARQ processes for early data transmissions and non-early data transmissions, respectively, which can be implemented in a HARQ transmitter, such as a UE, a base station, or a DU of a base station in the RAN of Fig. 1A;
Fig. 19 is a flow diagrams of an example method for using different counts of HARQ processes for early data transmissions and non-early data transmissions, respectively, which can be implemented in a HARQ receiver, such as a UE, a base station, or a DU of a base station in the RAN of Fig. 1A;
Fig. 20-21 are flow diagrams of example methods for determining whether to enable segmentation in downlink data transmissions depending on whether a radio connection between a UE and a RAN is inactive, which can be implemented in a base station or a DU of the base station in a RAN of Fig. 1A;
Fig. 22 is a flow diagram of an example method for performing early data transmission of data with an RRC release message for a UE, which can be implemented in a CU of a base station in a RAN of Fig. 1A;
Fig. 23 is a flow diagram of an example method for performing early data transmission of data with an RRC release message for a UE, which can be implemented in a DU of a base station in a RAN of Fig. 1A;
Fig. 24 is a flow diagram of an example method for managing early data transmission, which can be implemented in a DU of a base station in a RAN of Fig. 1A;
Fig. 25 is a flow diagram of an example method for managing early data transmission, which can be implemented in a CU of a base station in a RAN of Fig. 1A; and
Fig. 26 is a flow diagram of an example method for managing early data transmission, which can be implemented in a UE of Fig. 1A.

### DETAILED DESCRIPTION OF THE DRAWINGS

Network nodes of a RAN and/or a UE can use the techniques of this disclosure to manage early data transmission. For example, as described above, existing early data transmission techniques were not designed for distributed base stations. As a result, if a DU receives data from a UE operating in an RRC_INACTIVE, state, the DU cannot send the data to the CU because there is no available F1-U connection or interface (i.e., a connection or interface for user plane traffic) between the CU and the DU for the UE. Likewise, if a CU receives data for the UE from a core network, the CU cannot send the data to the UE because there is no available F1-U connection or interface between the CU and DU for the UE. Accordingly, the techniques of this disclosure provide for establishment of such an interface between the CU and DU when the UE operates in the inactive mode.

A DU, for example, can receive both data and an RRC message (e.g., an *RRCResumeRequest* message) from a UE operating in the inactive state. The DU can then transmit the RRC message to the CU via a control plane interface. To transmit the data to the CU, the DU can either (i) include the data with the RRC message and transmit both the data and the RRC message over the control plane interface (e.g., in a DU-to-CU interface message or an *Initial UL RRC Message Transfer* message), or (ii) transmit the data over a user plane interface after transmitting the RRC message. For example, after receiving the RRC message, the CU can perform a UE Context Modification procedure or a UE Context Setup procedure with the DU to establish the user plane interface, and the DU can transmit the data to the CU after the UE Context procedure. Alternatively, the DU can transmit the data afterwards to an internet protocol (IP) address of the CU.

After receiving the RRC message, the CU can determine whether there is additional data to communicate with the UE. If so, then the CU can perform a UE Context Modification procedure or a UE Context Setup procedure with the DU (if not performed previously). The UE can then transmit uplink data to the DU, and the DU can forward the uplink data to the CU over a user plane interface. Likewise, the CU can transmit downlink data to the DU over the user plane interface, and the DU can forward the downlink data to the UE.

If the UE does not have additional uplink data to transmit to the network, or if the CU does not have additional downlink data to transmit to the UE, then the CU can transmit an RRC release message to the UE via the DU. If the CU has a single downlink data packet to transmit to the UE, however, then the CU can include the downlink data packet with the RRC release message.

Further, a base station can configure a UE that operates in the inactive mode to use a number of hybrid automatic repeat request (HARQ) processes that does not exceed the inactive mode capabilities of the UE, where a "number" of HARQ processes is referred to in this disclosure as a "count" of HARQ processes. For example, after receiving the RRC message, the DU can transmit downlink control information (DCI) to the UE to configure the UE to use a first count of HARQ processes to receive and/or transmit data. Additionally or alternatively, the DCI can indicate that the UE should use the same HARQ process number that the UE previously utilized to transmit the RRC message to transmit any subsequent uplink data.

One example embodiment of these techniques is a method in a distributed unit (DU) of a distributed base station for managing early data transmission. The method can be executed by processing hardware and includes receiving, from a user equipment (UE) when the UE operates in an inactive state associated with a protocol for controlling radio resources, (i) data and (ii) a message formatted in accordance with the protocol. The method further includes transmitting, to a central unit (CU) of the distributed base station, the message via a control plane interface, and transmitting the data to the CU.

Another example embodiment of these techniques is a distributed unit (DU) including processing hardware and configured to implement the method above.

We further describe a method in a central unit (CU) of a distributed base station for managing early transmission. The method can be executed by processing hardware and includes receiving, from a distributed unit (DU) of the distributed base station via a control plane interface, a DU-to-CU interface message including (i) data and (ii) a message formatted in accordance with a protocol for controlling radio resources, for a user equipment (UE) operating in an inactive state associated with the protocol. The method also includes extracting the data and the message from the DU-to-CU interface message.

Another example is a central unit (CU) including processing hardware and configured to implement the method above.

A yet further example is a method in a user equipment (UE) for managing early data transmission. The method can be executed by processing hardware and includes transitioning from a connected state to an inactive state associated with a protocol for controlling radio resources. The method also includes transmitting to a base station (i) a message formatted in accordance with the protocol and (ii) first data. The method further includes communicating subsequent data with the base station using a count of hybrid automatic repeat request (HARQ) processes equal to or below a threshold count of HARQ processes for the UE operating in the inactive state.

Another example is a user equipment (UE) including processing hardware and configured to implement the method above.

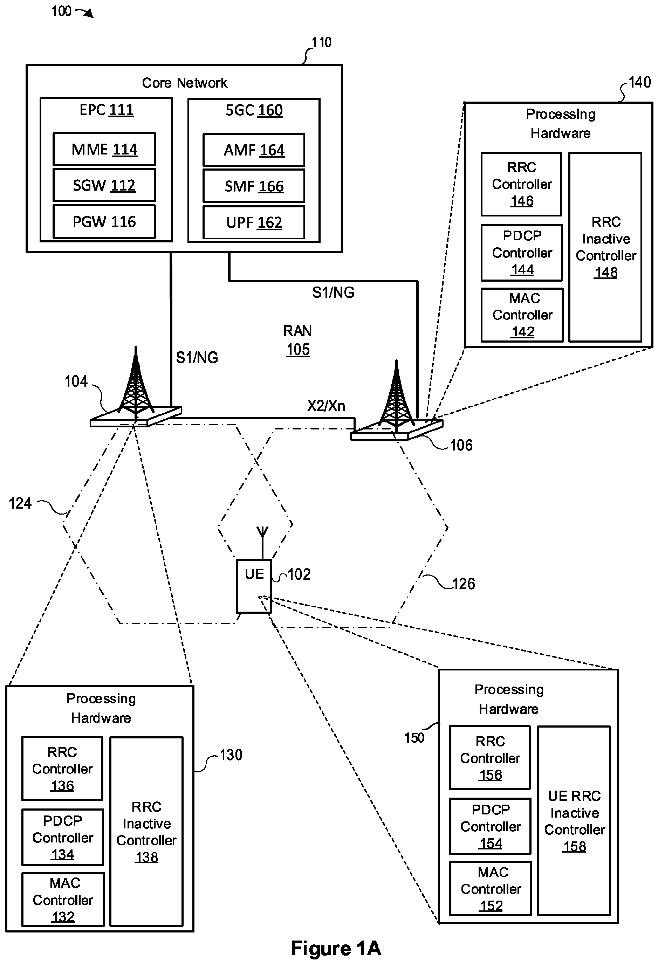

Referring first to Fig. 1A, an example wireless communication system 100 includes a UE 102, a base station (BS) 104, a base station 106, and a core network (CN) 110. The base stations 104 and 106 can operate in a RAN 105 connected to the core network (CN) 110. The CN 110 can be implemented as an evolved packet core (EPC) 111 or a fifth generation (5G) core (5GC) 160, for example. The CN 110 can also be implemented as a sixth generation (6G) core in another example.

The base station 104 covers a cell 124, and the base station 106 covers a cell 126. If the base station 104 is a gNB, the cell 124 is an NR cell. If the base station 124 is an ng-eNB, the cell 124 is an evolved universal terrestrial radio access (E-UTRA) cell. Similarly, if the base station 106 is a gNB, the cell 126 is an NR cell, and if the base station 126 is an ng-eNB, the cell 126 is an E-UTRA cell. The cells 124 and 126 can be in the same Radio Access Network Notification Areas (RNA) or different RNAs. In general, the RAN 105 can include any number of base stations, and each of the base stations can cover one, two, three, or any other suitable number of cells. The UE 102 can support at least a 5G NR (or simply, "NR") or E-UTRA air interface to communicate with the base stations 104 and 106. Each of the base stations 104, 160 can connect to the CN 110 via an interface (e.g., S1 or NG interface). The base stations 104 and 106 also can be interconnected via an interface (e.g., X2 or Xn interface) for interconnecting NG RAN nodes.

Among other components, the EPC 111 can include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE to one or more external packet data networks, e.g., an Internet network and/or an Internet Protocol (IP) Multimedia Subsystem (IMS) network. The 5GC 160 includes a User Plane Function (UPF) 162 and an Access and Mobility Management (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

As illustrated in Fig. 1A, the base station 104 supports a cell 124, and the base station 106 supports a cell 126. The cells 124 and 126 can partially overlap, so that the UE 102 can select, reselect, or hand over from one of the cells 124 and 126 to the other. To directly exchange messages or information, the base station 104 and base station 106 can support an X2 or Xn interface. In general, the CN 110 can connect to any suitable number of base stations supporting NR cells and/or EUTRA cells.

As discussed in detail below, the UE 102 and/or the RAN 105 of this disclosure reduces latency in uplink transmission of data when the radio connection between the UE 102 and the RAN 105 is suspended, e.g., in the inactive or idle state of the protocol for controlling radio resources between the UE 102 and the RAN 105. For clarity, the examples below refer to the RRC_INACTIVE or RRC_IDLE state of the RRC protocol.

As used in this disclosure, the term "data" or "data packet" refers to signaling, control-plane information at a protocol layer of controlling radio resources (e.g., RRC), controlling mobility management (MM), controlling session management (SM), or refers to non-signaling, non-control-plane information at protocol layers above the layer of the protocol for controlling radio resources (e.g., RRC), above the layer of the protocol for controlling mobility management (MM), above the layer of the protocol for controlling session management (SM), or above the layer of the protocol for controlling quality of service (QoS) flows (e.g., service data adaptation protocol (SDAP)). The data to which the UE and/or the RAN applies the techniques of this disclosure can include for example Internet of things (IoT) data, Ethernet traffic data, Internet traffic data, or a short message service (SMS) message. Further, as discussed below, the UE 102 in some implementations applies these techniques only if the size of the data is below a certain threshold value.

In the example scenarios discussed below, the UE 102 transitions to the RRC_INACTIVE or RRC_IDLE state, then selects a cell of the base station 104, and exchanges data with the base station 104 either via the base station 106 or with the base station 104 directly, without transitioning to RRC _CONNECTED state. As a more specific example, after the UE 102 determines that data is available for uplink transmission in the RRC_INACTIVE or RRC_IDLE state, the UE 102 can apply one or more security functions to the UL data packet, generate a first UL protocol data unit (PDU) including the security-protected packet, include an uplink (UL) RRC message along with the first UL PDU in a second UL PDU, and transmit the second UL PDU to the RAN 105. The UE 102 includes a UE identity/identifier (ID) of the UE 102 in the UL RRC message. The RAN 105 can identify the UE 102 based on the UE ID. In some implementations, the UE ID can be an inactive Radio Network Temporary Identifier (I-RNTI) or a non-access stratum (NAS) ID. The NAS ID can be a S-Temporary Mobile Subscriber Identity (S-TMSI) or a Global Unique Temporary Identifier (GUTI).

The security function can include an integrity protection and/or encryption function. When integrity protection is enabled, the UE 102 can generate a message authentication code for integrity (MAC-I) to protect integrity of the data. Thus, the UE 102 in this case generates a security-protected packet including the data and the MAC-I. When encryption is enabled, the UE 102 can encrypt the data to obtain an encrypted packet, so that the security-protected packet includes encrypted data. When both integrity protection and encryption are enabled, the UE 102 can generate a MAC-I for protecting integrity of the data and encrypt the data along with the MAC-I to generate an encrypted packet and an encrypted MAC-I. The UE 102 then can transmit the security-protected packet to the RAN 105, while in the RRC_INACTIVE or RRC_IDLE state.

In some implementations, the data is an uplink (UL) service data unit (SDU) of the packet data convergence protocol (PDCP) or SDAP. The UE 102 applies the security function to the SDU and includes the secured SDU in a first UL PDU (e.g., a UL PDCP PDU). The UE 102 then includes the UL PDCP PDU in a second UL PDU such as a UL MAC PDU, which can be associated with the medium access control (MAC) layer. Thus, the UE 102 in these cases transmits the secured UL PDCP PDU in the UL MAC PDU. In some implementations, the UE 102 can include, in the UL MAC PDU, a UL RRC message. In other implementations, the UE 102 may not include a UL RRC message in the UL MAC PDU. In this case, the UE 102 may not include a UE ID of the UE 102 in the UL MAC PDU not including a UL RRC message. In yet other implementations, the UE 102 can include the UL PDCP PDU in a UL radio link control (RLC) PDU and then include the UL RLC PDU in the UL MAC PDU. In the case of including the UL RRC message in the UL MAC PDU, the UE 102 in some implementations generates an RRC MAC-I and includes the RRC MAC-I in the UL RRC message. For example, the RRC MAC-I is a *resumeMAC-I* field, as specified in 3GPP specification 38.331. In other implementations, the UE can obtain the RRC MAC-I from the UL RRC message with an integrity key (e.g., K_{RRCint} key), an integrity protection algorithm, and other parameters COUNT (e.g., 32-bit, 64-bit or 128-bit value), BEARER (e.g., 5-bit value) and DIRECTION (e.g., 1-bit value).

In other implementations, the data is an uplink (UL) protocol data unit (SDU) of the NAS. The UE 102 applies the security function to the SDU and includes the secured SDU in a first UL PDU such as a NAS PDU, which can be associated with the NAS layer. For example, the NAS layer can be MM sublayer or SM sublayer of 5G, Evolved Packet System (EPS) or 6G. Then the UE 102 can include the UL NAS PDU in a second UL PDU such as a UL RRC message. Thus, the UE 102 in these cases transmits the (first) secured UL NAS PDU in the UL RRC message. In some implementations, the UE 102 can include the UL RRC message in a UL MAC PDU and transmits the UL MAC PDU to a base station (e.g., base station 104 or 106) via a cell (e.g., cell 124 or 126). In this case, the UE 102 may not include an RRC MAC-I in the UL RRC message. Alternatively, the UE 102 may include an RRC MAC-I as described above.

In some implementations, the UL RRC message described above can be a common control channel (CCCH) message, an RRC resume request message. or an RRC early data request message. The UL RRC message can include a UE ID of the UE 102 as described above.

More generally, the UE 102 can secure the data using at least one of encryption and integrity protection, include the secured data as a security-protected packet in the first UL PDU, and transmit the first UL PDU to the RAN 105 in the second UL PDU.

In some scenarios and implementations, the base station 106 can retrieve the UE ID of the UE 102 from the UL RRC message and identify the base station 104 as the destination of the data in the first UL PDU, based on the determined UE ID. In one example implementation, the base station 106 retrieves the first UL PDU from the second UL PDU and transmits the first UL PDU to the base station 104. The base station 104 then retrieves the security-protected packet from the first UL PDU, applies one or two security functions to decrypt the data and/or check the integrity protection, and transmits the data to the CN 110 (e.g., SGW 112, UPF 162, MME 114 or AMF 164) or an edge server. In some implementations, the edge server can operate within the RAN 105. More specifically, the base station 104 derives at least one security key from UE context information of the UE 102. Then the base station 104 retrieves the data from the security-protected packet by using the at least one security key and transmits the data to the CN 110 or edge server. When the security-protected packet is an encrypted packet, the base station 104 decrypts the encrypted packet to obtain the data by using the at least one security key (e.g., an (d)encryption key). If the security-protected packet is an integrity-protected packet, the integrity protected packet may include the data and the MAC-I. The base station 104 can verify whether the MAC-I is valid for the security-protected packet by using the at least one security key (e.g., an integrity key). When the base station 104 confirms that the MAC-I is valid, the base station 104 sends the data to the CN 110 or edge server. On the other hand, when the base station 104 determines that the MAC-I is invalid, the base station 104 discards the security-protected packet. Further, if the security-protected packet is both encrypted and integrity-protected, the encrypted and integrity-protected packet may include the encrypted packet along with the encrypted MAC-I. The base station 104 in this case decrypts the encrypted packet and the encrypted MAC-I to obtain the data and the MAC-I. The base station 104 then determines whether the MAC-I is valid for the data. If the base station 104 determines that the MAC-I is valid, the base station 104 retrieves the data and forwards the data to the CN 110 or edge server. However, if the base station 104 determines that the MAC-I is invalid, the base station 104 discards the packet.

In another implementation, the base station 106 retrieves the security-protected packet from the first UL PDU. The base station 106 performs a retrieve UE context procedure with the base station 104 to obtain UE context information of the UE 102 from the base station 104. The base station 106 derives at least one security key from the UE context information. Then the base station 106 retrieves the data from the security-protected packet by using the at least one security key and transmits the data to the CN 110 (e.g., UPF 162) or an edge server. When the security-protected packet is an encrypted packet, the base station 106 decrypts the encrypted packet to obtain the data by using the at least one security key (e.g., an (d)encryption key). If the security-protected packet is an integrity-protected packet, the integrity protected packet may include the data and the MAC-I. The base station 106 can verify whether the MAC-I is valid for the security-protected packet by using the at least one security key (e.g., an integrity key). When the base station 106 confirms that the MAC-I is valid, the base station 106 sends the data to the CN 110. On the other hand, when the base station 106 determines that the MAC-I is invalid, the base station 106 discards the security-protected packet. Further, if the security-protected packet is both encrypted and integrity-protected, the encrypted and integrity-protected packet may include the encrypted packet along with the encrypted MAC-I. The base station 106 in this case decrypts the encrypted packet and the encrypted MAC-I to obtain the data and the MAC-I. The base station 106 then determines whether the MAC-I is valid for the data. If the base station 106 determines that the MAC-I is valid, the base station 106 retrieves the data and forwards the data to the data CN 110. However, if the base station 106 determines that the MAC-I is invalid, the base station 106 discards the packet.

In other scenarios and implementations, the base station 104 can retrieve the UE ID of the UE 102 from the UL RRC message and identify that the base station 104 stores UE context information of the UE 102. Thus, the base station 104 retrieves the security-protected packet from the first UL PDU, retrieve the data from the security-protected packet and sends the data to the CN 110 or edge server as described above.

Further, the RAN 105 in some cases transmits data in the downlink (DL) direction to the UE 102 operating in the RRC_INACTIVE or RRC_IDLE state.

For example, when the base station 104 determines that data is available for downlink transmission to the UE 102 currently operating in the RRC _INACTIVE or RRC_IDLE state, the base station 104 can apply at least one security function to the data to generate a security-protected packet, generate a first DL PDU including the security-protected packet, and the first DL PDU in a second DL PDU. To secure the data, the base station 104 can apply the security function (e.g., integrity protection and/or encryption) to the data. More particularly, when integrity protection is enabled, the base station 104 generates a MAC-I for protecting integrity of the data, so that security-protected packet includes the data and the MAC-I. When encryption is enabled, the base station 104 encrypts the data to generate an encrypted packet, so that security-protected packet is an encrypted packet. Further, when both integrity protection and encryption are enabled, the base station 104 can generate a MAC-I for protecting integrity of the data and encrypt the data along with the MAC-I to generate an encrypted packet and an encrypted MAC-I. The base station 104 in some implementations generates a first DL PDU, such as a DL PDCP PDU, using the security-protected packet, includes the first DL PDU in a second DL PDU associated with the MAC layer for example (e.g., a DL MAC PDU), and transmits the second DL PDU to the UE 102 without first causing the UE 102 to transition from the RRC INACTIVE or RRC IDLE state to the RRC_CONNECTED state. In some implementations, the base station 104 includes the DL PDCP PDU in a DL RLC PDU, includes the DL RLC PDU in the DL MAC PDU and transmits the DL MAC PDU to the UE 102 without first causing the UE 102 to transition from the RRC_INACTIVE or RRC_IDLE state to the RRC_CONNECTED state.

In another implementation, the base station 104 transmits the first DL PDU to the base station 106, which then generates a second PDU (e.g., a DL MAC PDU) including the first DL PDU and transmits the second DL PDU to the UE 102 without first causing the UE 102 to transition from the RRC _INACTIVE or RRC_IDLE state to the RRC_CONNECTED state. In some implementations, the base station 106 generates a DL RLC PDU including the first DL PDU and includes the DL RLC PDU in the second DL PDU. In yet another implementation, the base station 104 includes the first DL PDU in a DL RLC PDU and transmits the DL RLC PDU to the base station 106, which then generate a second DL PDU (e.g., a DL MAC PDU) including the DL RLC PDU and transmits the second DL PDU to the UE 102.

In some implementations, the base station (i.e., the base station 104 or 106) generates a downlink control information (DCI) and a cyclic redundancy check (CRC) scrambled with an ID of the UE 102 to transmit the second DL PDU generated by the base station. In some implementations, the ID of the UE 102 can be a Radio Network Temporary Identifier (RNTI). For example, the RNTI can be a cell RNTI (C-RNTI), a temporary C-RNTI or an inactive C-RNTI. The base station transmits the DCI and scrambled CRC on a physical downlink control channel (PDCCH) to the UE 102 operating in the RRC_INACTIVE or RRC_IDLE state. The base station scrambles the CRC with the ID of the UE 102. In some implementations, the base station may assign the ID of the UE 102 to the UE 102 in a random access response that the base station transmits in a random access procedure with the UE 102 before transmitting the DCI and scrambled CRC. In other implementations, the base station may assign the ID of the UE 102 to the UE 102 in an RRC message (e.g., RRC release message or an RRC reconfiguration message) that the base station transmits to the UE 102 before transmitting the DCI and scrambled CRC, e.g., while the UE 102 was in the RRC_CONNECTED state.

The UE 102 operating in the RRC INACTIVE or RRC IDLE state can receive the DCI and scrambled CRC on the PDCCH. Then the UE 102 confirms that a physical downlink shared channel (PDSCH), including the second DL PDU, is addressed to the UE according to the ID of the UE 102, DCI, and scrambled CRC. The UE 102 then can retrieve the data from the security-protected packet. If the security-protected packet is an encrypted packet, the UE 102 can decrypt the encrypted packet using the appropriate decryption function and the security key to obtain the data. If the security-protected packet is the integrity-protected packet including the data and the MAC-I, the UE 102 can determine whether the MAC-I is valid. If the UE 102 confirms that the MAC-I is valid, the UE 102 retrieves the data. If, however, the UE 102 determines that the MAC-I is invalid, the UE 102 discards the packet. Finally, when the security-protected packet is both encrypted and integrity-protected, with encrypted data and an encrypted MAC-I, the UE 102 can decrypt the encrypted packet and encrypted MAC-I to obtain the data and the MAC-I. The UE 102 then can verify that the MAC-I is valid for the data. If the UE 102 confirms that the MAC-I is valid, the UE 102 retrieves and processes the data. Otherwise, when the UE 102 determines that the MAC-I is invalid, the UE 102 discards the data.

The base station 104 is equipped with processing hardware 130 that can include one or more general-purpose processors (e.g., CPUs) and a non-transitory computer-readable memory storing instructions that the one or more general-purpose processors execute. Additionally or alternatively, the processing hardware 130 can include special-purpose processing units. The processing hardware 130 in an example implementation includes a Medium Access Control (MAC) controller 132 configured to perform a random access procedure with one or more user devices, receive uplink MAC protocol data units (PDUs) to one or more user devices, and transmit downlink MAC PDUs to one or more user devices. The processing hardware 130 can also include a Packet Data Convergence Protocol (PDCP) controller 134 configured to transmit DL PDCP PDUs in accordance with which the base station 104 can transmit data in the downlink direction, in some scenarios, and receive UL PDCP PDUs in accordance with which the base station 104 can receive data in the uplink direction, in other scenarios. The processing hardware further can include an RRC controller 136 to implement procedures and messaging at the RRC sublayer of the protocol communication stack. The processing hardware 130 in an example implementation includes an RRC inactive controller 138 configured to manage uplink and/or downlink communications with one or more UEs operating in the RRC_INACTIVE or RRC_IDLE state. The base station 106 can include generally similar components. In particular, components 142, 144, 146, and 148 can be similar to the components 132, 134, 136, and 138, respectively.

The UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes an RRC inactive controller 158 configured to manage uplink and/or downlink communications when the UE 102 operates in the RRC_INACTIVE state. The processing hardware 150 in an example implementation includes a Medium Access Control (MAC) controller 152 configured to perform a random access procedure with a base station, transmit uplink MAC protocol data units (PDUs) to the base station, and receive downlink MAC PDUs from the base station. The processing hardware 150 can also include a PDCP controller 154 configured to transmit DL PDCP PDUs in accordance with which the base station 106 can transmit data in the downlink direction, in some scenarios, and receive UL PDCP PDUs in accordance with which the base station 106 can receive data in the uplink direction, in other scenarios. The processing hardware further can include an RRC controller 156 to implement procedures and messaging at the RRC sublayer of the protocol communication stack.

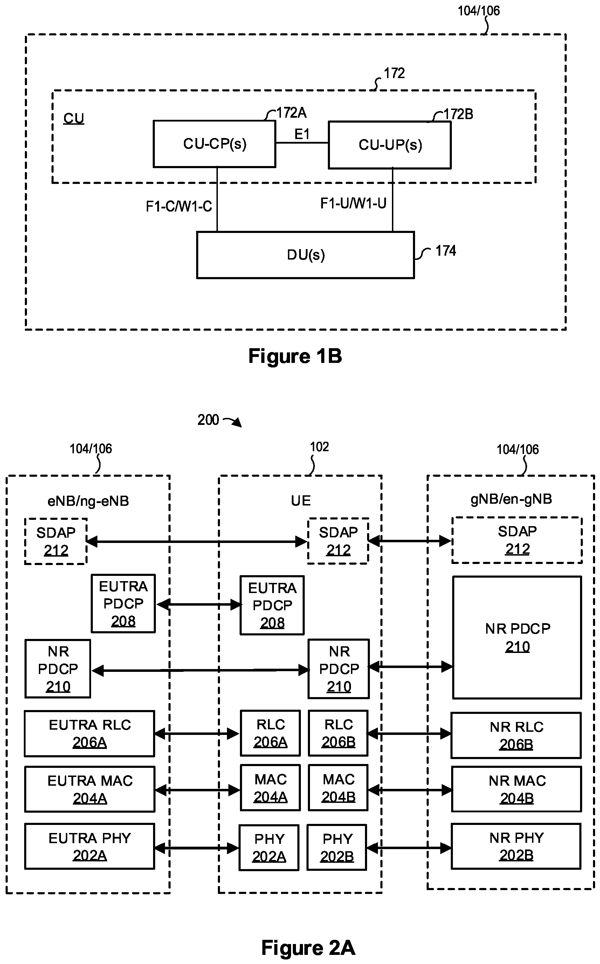

Fig. 1B depicts an example, distributed or disaggregated implementation of any one or more of the base stations 104, 106. In this implementation, the base station 104, 106 includes a central unit (CU) 172 and one or more DUs 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 can include a PDCP controller, an RRC controller and/or an RRC inactive controller such as PDCP controller 134, 144, RRC controller 136, 146 and/or RRC inactive controller 138, 148. In some implementations, the CU 172 can include a radio link control (RLC) controller configured to manage or control one or more RLC operations or procedures. In other implementations, the CU 172 does not include an RLC controller.

Each of the DUs 174 also includes processing hardware that can include one or more general-purpose processors (e.g., CPUs) and computer-readable memory storing machine-readable instructions executable on the one or more general-purpose processors, and/or special-purpose processing units. For example, the processing hardware can include a MAC controller (e.g., MAC controller 132, 142) configured to manage or control one or more MAC operations or procedures (e.g., a random access procedure), and/or a RLC controller configured to manage or control one or more RLC operations or procedures. The process hardware can also include a physical layer controller configured to manage or control one or more physical layer operations or procedures.

In some implementations, the CU 172 can include a logical node CU-CP 172A that hosts the control plane part of the PDCP protocol of the CU 172. The CU 172 can also include logical node(s) CU-UP 172B that hosts the user plane part of the PDCP protocol and/or Service Data Adaptation Protocol (SDAP) protocol of the CU 172. The CU-CP 172A can transmit control information (e.g., RRC messages, F1 application protocol messages), and the CU-UP 172B can transmit the data packets (e.g., SDAP PDUs or Internet Protocol packets).

The CU-CP 172A can be connected to multiple CU-UP 172B through the E1 interface. The CU-CP 172A selects the appropriate CU-UP 172B for the requested services for the UE 102. In some implementations, a single CU-UP 172B can be connected to multiple CU-CP 172A through the E1 interface. The CU-CP 172A can be connected to one or more DU 174s through an F1-C interface. The CU-UP 172B can be connected to one or more DU 174 through the F1-U interface under the control of the same CU-CP 172A. In some implementations, one DU 174 can be connected to multiple CU-UP 172B under the control of the same CU-CP 172A. In such implementations, the connectivity between a CU-UP 172B and a DU 174 is established by the CU-CP 172A using Bearer Context Management functions.

Fig. 2A illustrates, in a simplified manner, an example protocol stack 200 according to which the UE 102 can communicate with an eNB/ng-eNB or a gNB (*e.g.,* one or more of the base stations 104, 106).

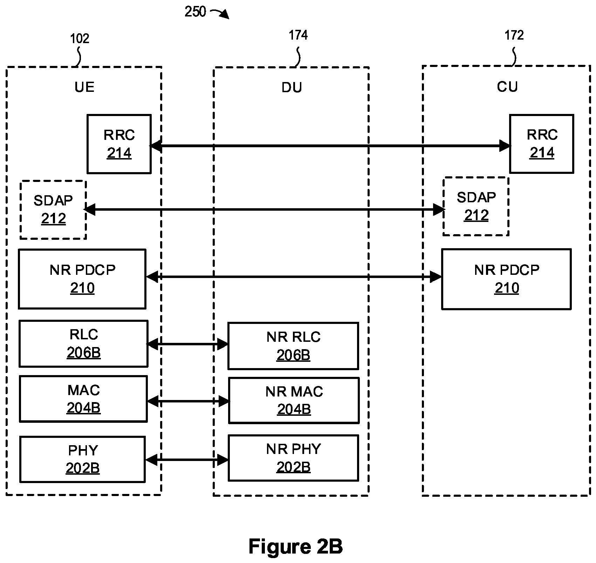

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to an EUTRA PDCP sublayer 208 and, in some cases, to a NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. The NR PDCP sublayer 210 in turn can provide data transfer services to Service Data Adaptation Protocol (SDAP) 212 or a radio resource control (RRC) sublayer (not shown in Fig. 2). The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP 210 over EUTRA RLC 206A, and SDAP sublayer 212 over the NR PDCP sublayer 210.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide signaling radio bearers (SRBs) or RRC sublayer (not shown in Fig. 2) to exchange RRC messages or non-access-stratum (NAS) messages, for example. On a user plane, the EUTRA PDCP sublayer 208 and the NR PDCP sublayer 210 can provide DRBs to support data exchange. Data exchanged on the NR PDCP sublayer 210 can be SDAP PDUs, Internet Protocol (IP) packets or Ethernet packets.

Fig. 2B illustrates, in a simplified manner, an example protocol stack 250 which the UE 102 can communicate with a DU (e.g., DU 174) and a CU (e.g., CU 172). The radio protocol stack 200 is functionally split as shown by the radio protocol stack 250 in Fig. 2B. The CU at any of the base stations 104 or 106 can hold all the control and upper layer functionalities (e.g., RRC 214, SDAP 212, NR PDCP 210), while the lower layer operations (e.g., NR RLC 206B, NR MAC 204B, and NR PHY 202B) are delegated to the DU. To support connection to a 5GC, NR PDCP 210 provides SRBs to RRC 214, and NR PDCP 210 provides DRBs to SDAP 212 and SRBs to RRC 214.

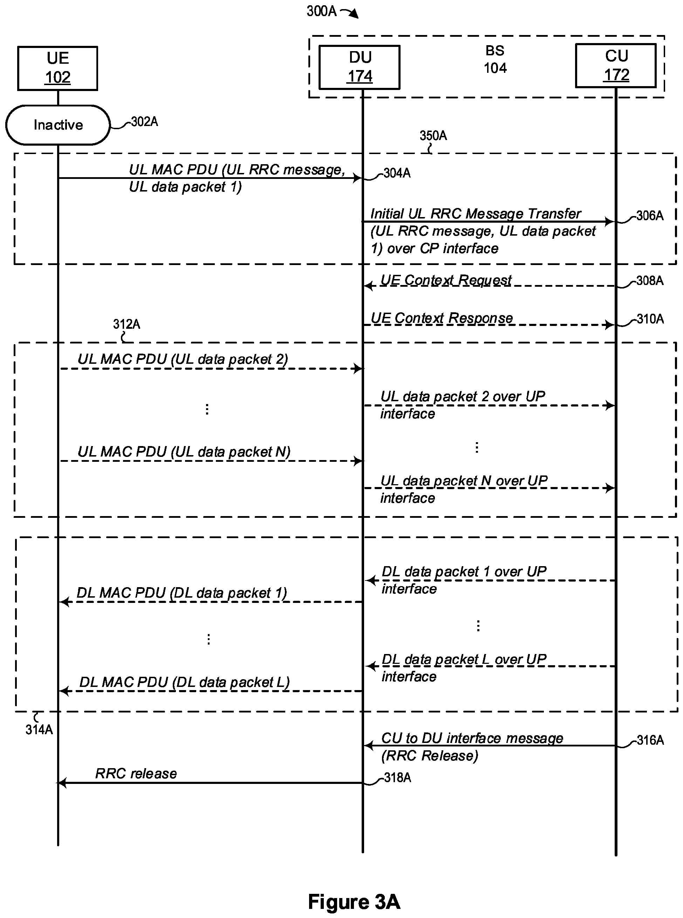

Next, several example scenarios that involve several components of Figs. 1A and relate to transmitting and/or receiving data in an inactive or idle state are discussed with reference to Figs. 3A-6B. Generally speaking, events in Figs. 3A-6B that are similar are labeled with similar reference numbers (e.g., events 302(A-B) are similar to events 402(A-C), 502(A-B), 602(A-B)), with differences discussed below where appropriate. With the exception of the differences shown in the figures and discussed below, any of the alternative implementations discussed with respect to a particular event (e.g., for messaging and processing) may apply to events labeled with similar reference numbers in other figures. To simplify the following description, the "inactive state" can represent the RRC_INACTIVE or RRC_IDLE state, and the connected state can represent the RRC_CONNECTED state.

Referring first to Fig. 3A, in a scenario 300A, the UE 102 initially operates 302A in an inactive state with the base station 104 including a CU 172 and a DU 174. In some scenarios and implementations, the UE 102 was in a connected state with the RAN 105 (e.g., the base station 104, base station 106 or another base station not shown in Fig. 1A), before the UE 102 operates 302A in the inactive state. After a (first) certain period of data inactivity for the UE 102, the RAN 105 can determine that neither the RAN 105 nor the UE 102 has transmitted any data in the downlink direction or the uplink direction, respectively, during the (first) certain period. In response to the determination, the RAN 105 can transmit a first RRC release message to the UE 102 and instruct the UE 102 to transition to the inactive state. The UE 102 transitions to the inactive state upon receiving the first RRC release message. The RAN 105 can assign an *I-RNTI* to the UE 102 and include the assigned value in the first RRC release message.

At a later time, the UE 102 in the inactive state initiates early data transmission to transmit uplink data. The data in some example scenarios is an Internet Protocol (IP) packet, an Ethernet packet, or an application packet. In other scenarios, the data is an RRC PDU that includes an RRC message, a NAS message, an IP packet, and Ethernet packet, or an application packet. Still further, the data in some scenarios can be an RRC PDU including a NAS PDU, such that the NAD PDU includes an IP packet, an Ethernet packet, or an application packet. In some implementations, the UE 102 can determine whether the data qualifies for transmission in the inactive state in view of one or more of such factors as whether the data is an IMS packet, whether the data is associated with a radio bearer not suitable or configured for early data transmission, whether the data is an NAS message for initiating a particular NAS procedure, the size of the data, etc. When the UE 102 determines that the data does not qualify for transmission in the inactive state, the UE 102 can perform an RRC procedure (e.g., RRC connection establishment procedure or RRC resume procedure) to transition to the connected state.

In response to or after initiating data transmission, the UE 102 generates an initial MAC PDU, which includes a UL RRC message and a UL data packet 1, and transmits 304A the initial MAC PDU to the DU 174 on cell 124. The DU 174 retrieves the UL RRC message and the UL data packet 1 from the initial MAC PDU and sends 306A to the CU 172, via control plane (CP) interface (e.g., F1-C interface or a W1-C interface), an *Initial UL RRC Message Transfer* message including the UL RRC message and the UL data packet 1. Alternatively, the DU 174 can send 306A to the CU 172 a DU to CU interface message including the UL RRC message and the UL data packet 1. For example, the DU to CU interface message can be a new or existing F1AP message or W1AP message specified in 3GPP specification 38.473 or 37.473. Then, the CU 172 can retrieve the UL data packet 1 from the *Initial UL RRC Message Transfer* message or the DU to CU interface message and send the UL data packet 1 to the CN 110 (e.g., SGW 112, UPF 162, MME 114 or AMF 164). Alternatively, the CU 172 can transmit the UL data packet 1 to an edge server instead of the CN 110. In some implementations, the edge server can operate within the RAN 105. The events 304A and 306A are collectively referred to in Fig. 3A as an initial UL data communication 350A.

After or in response to receiving the *Initial UL RRC Message Transfer* message or the DU to CU interface message, the CU 172 can perform a UE Context procedure (e.g., UE Context Setup procedure or UE Context Modification procedure) with the DU 174 for the UE 102. In the UE Context procedure, the CU 172 sends 308A a UE Context Request message (e.g., *UE Context Setup Request* or *UE Context Modification Request* message), e.g., via the CP interface, to the DU 174 to establish or activate a UE Context for the UE 102 at the DU 174. In response, the DU 174 can send 310A a UE Context Response to the CU 172, e.g., via the CP interface. In some implementations, if the CU 172 determines that the UE 102 has subsequent data to transmit or the CU 172 has or expects to have DL data to transmit to the UE 102, the CU 172 performs the UE Context procedure. In response to the UE Context procedure, the DU 174 may establish a user plane (UP) interface (i.e., a F1-U interface or W1-U interface) with the CU 172 over which the DU 174 and CU 172 can communicate user plane traffic (i.e., UL and DL data packets for the UE 102). The UE 102 can then transmit 312A the subsequent data and/or receive 314A the DL data after the UE Context procedure. Otherwise (i.e., if the CU 172 determines that the UE 102 does not have subsequent data to transmit and the CU 172 does not have DL data to transmit to the UE 102), the CU 172 does not perform the UE Context procedure with the DU 174.

Accordingly, if the CU 172 determines (1) that the UE 102 does not have subsequent data to transmit and (2) that the CU 172 does not expect to transmit DL data to the UE 102, the CU 172 can skip transmitting 308A the UE Context Request message. The CU 172 can then transmit 316A an RRC Release message to the DU 174, which in turn transmits 318A the RRC release message to the UE 102. Further, the CU 172 can skip transmitting 308A the UE Context Request message if the CU 172 determines that the CU 172 has a single DL data packet to transmit to the UE 102. The CU 172 can transmit 316A the DL data packet with the RRC Release message (or included in the RRC Release message), and the DU 174 can in turn transmit 318A the DL data packet to the UE 102 with the RRC release message.

In some implementations, the UE 102 can indicate that the UE 102 has subsequent data to transmit in the UL RRC message. Thus, the CU 172 determines that the UE 102 has subsequent data to transmit in accordance with the indication in the UL RRC message. If the UE 102 has no subsequent data to transmit, the UE 102 can either indicate that the UE 102 has no subsequent data to transmit in the UL RRC message or not include the indication that the UE has subsequent data to transmit in the UL RRC message.

In other implementations, the UE 102 can indicate that the UE 102 has subsequent data to transmit in a MAC control element (e.g., a buffer status report) in the UL MAC PDU 304A. From the MAC control element, the DU 174 can determine that the UE 102 has subsequent data to transmit and indicate, in the *Initial UL RRC Message Transfer* message, that the UE 102 has subsequent data to transmit. Thus, the CU 172 can determine that the UE 102 has subsequent data to transmit from the indication in the *Initial UL RRC Message Transfer* message or the DU to CU interface message. If the UE 102 has no subsequent data to transmit, the UE 102 can either indicate that the UE 102 has no subsequent data to transmit in a MAC control element in the UL MAC PDU 304A or not include the indication that the UE has subsequent data to transmit in the UL MAC PDU 304A. The DU 174 can indicate, in the *Initial UL RRC Message Transfer* message or the DU to CU interface message, that the UE 102 has no subsequent data to transmit. Thus, the CU 172 can determine that the UE 102 has no subsequent data to transmit from the indication in the *Initial UL RRC Message Transfer* message or the DU to CU interface message.

If the UE 102 indicates that the UE has no subsequent data to transmit in the UL RRC message or the indication in the *Initial UL RRC Message Transfer* message or the DU to CU interface message, the CU 172 can determine that the UE has no more data to transmit. In such cases, if the CU 172 does not have DL data for the UE 102, the CU 172 can directly send 316A, 318A the RRC release message to the UE 102 via the DU 174. If the CU 172 has a single DL data packet for the UE 102, the CU 172 can directly send 316A the DL data packet with the RRC release message the DU 174, which in turn sends 318A a DL MAC PDU including the RRC release message and DL data packet to the UE 102.

After transmitting the initial MAC PDU, the UE 102 can transmit 312A subsequent MAC PDU(s) where each includes a particular UL data packet to the DU 174, which in turn transmits 312A the particular data packet via a UP interface to the CU 172. Then, the CU 172 sends the particular data packet to the CN 110 or edge server. Alternatively, the base station 104 can transmit these UL data packets to an edge server instead of the CN 110. The subsequent MAC PDU(s) include (N-1) MAC PDU(s), where "N" is an integer and larger than 0 or 1 (i.e., a natural number larger than 1). The event 312A is referred to in Fig. 3A as further/additional UL data communications. In some implementations, the UE 102 can include a particular RRC message in each of the UL MAC PDU(s) at event 312A. In other implementations, the UE 102 does not include an RRC message in each of the UL MAC PDU(s) at event 312A.

After receiving 306A the UL data packet 1 or transmitting the UL data packet 1 to the CN 110 or edge server, the base station 104 can receive one or more DL data packet(s) (e.g., 1, ..., L packets and "L" is an integer and larger than 0 or 1 (i.e., a natural number larger than 1)) from the CN 110 or edge server and in turn transmits 314A the DL data packet(s) to the DU 174 via the UP interface. For each DL data packet, the DU 174 generates a DL MAC PDU including the DL data packet and transmits 314A the DL MAC PDU to the UE 102. After determining no more data needs to be exchanged between the UE 102 and CU 172, the CU 172 104 sends 316A a CU to DU interface message including a (second) RRC release message for the UE 102 to the DU 174, e.g., via the CP interface. In turn, the DU 174 extracts the (second) RRC release message from the CU to DU interface message and transmits 318A the (second) RRC release message to the UE 102. In particular, the DU 174 can transmit 318A a DL MAC PDU including the RRC release message) to the UE 102. The UE 102 still stays in the inactive state from event 302A to event 318A and after receiving 318A the RRC release message.

In some implementations, the CU 172 can transmit 314A the DL data packet(s) to the UE 102 in parallel or alternating with receiving 312A the UL data packet(s). In other implementations, the DU 174 can transmit 314A the DL MAC PDU(s) after receiving 312A the UL MAC PDU(s). In some implementations, the DU 174 can transmit 314A the DL MAC PDU(s) to the UE 102 in parallel or alternating with receiving 312A the UL MAC PDU(s). In other implementations, the DU 174 can transmit 314A the DL MAC PDU(s) after receiving 312A the UL MAC PDU(s).

In some implementations, after a (second) certain period of data inactivity for the UE 102, the CU 172 can determine that neither the CU 172 nor the UE 102 has transmitted any data in the downlink direction or the uplink direction, respectively, during the (second) certain period. In response to the determination, the CU 172 can send 316A the CU to DU interface message to the DU 174. In some implementations, the second certain period of time can be shorter than the first certain period of time. In other implementations, the second certain period of time can be equal to or larger than the first certain period of time.

In some implementations, the CU to DU interface message 316A can be a *UE Context Release Command* message. In response, the DU 174 can send to the CU 172 a *UE Context Release Complete* message. In other implementations, the CU to DU interface message 316A can be a *DL RRC Message Transfer* message or a *UE Context Modification Request* message. The DU 174 can send to the CU 172 a *UE Context Modification Response* message in response to the *UE Context Modification Response* message. In such cases, the CU 172 can send to the DU 174 another *UE Context Release Command* message for the UE 102 after sending the CU to DU interface message to the DU 174. In response, the DU 174 can send to the CU 172 another *UE Context Release Complete* message.

To transmit the uplink data packets at events 304A and 312A, the UE 102 in some implementations applies at least one security function to each of the UL data packets (i.e., the UL data packet 1, UL data packet 2, ..., UL data packet N) to generate a security-protected packet. The at least one security function can rely on a certain security algorithm and use one or more security keys, as discussed in more detail below. After applying the at least one security function, the UE 102 can include the security-protected packet in a first UL PDU, include the first UL PDU in a second UL PDU, which may be associated with a lower protocol layer than the first UL PDU, and transmit the second UL PDU to the DU 174 at event 304A or 312A. In one example implementation, the RRC controller 156 generates the UL RRC message, the PDCP controller 154 includes the security-protected packet in a UL PDCP PDU (i.e., the first UL PDU), and the MAC controller 152 includes the UL RRC message and the UL PDCP PDU in a UL MAC PDU (i.e., the second UL PDU).

The one or more security keys the UE 102 utilizes can include an encryption key (also referred to as a ciphering key) and/or an integrity key, and the one or more security algorithms the UE 102 utilizes can include a ciphering algorithm and/or an integrity protection algorithm. In one implementation, the CU 172 can configure the ciphering algorithm and/or the integrity protection algorithm in the first RRC release message, described with reference to event 302A. In another implementation, the CU 172 can configure the ciphering algorithm and/or the integrity protection algorithm in an RRC message (e.g., a *SecurityModeCommand* or *RRC reconfiguration* message) transmitted to the UE while the UE 102 was in the connected state. Accordingly, to apply a security function and the security key(s) to the UL data packets, the UE 102 can encrypt the UL data packets using the (same) encryption key and the (same) ciphering algorithm, and/or perform integrity protection on the UL data packets by using the (same) integrity key and the (same) integrity protection algorithm.

More particularly, when encryption is enabled and integrity protection is not enabled for the UE 102, the UE 102 encrypts the UL data packets to generate encrypted UL data packets using the (same) encryption key and the (same) ciphering algorithm. The security-protected packets in this case include encrypted UL data packets. When encryption is not enabled but integrity protection is enabled for the UE 102, the UE 102 generates a MAC-I for each of the UL data packets using the (same) integrity key and the (same) integrity algorithm. Each of the security-protected packets in this case includes the particular UL data packet and the particular MAC-I. Further, when both integrity protection and encryption are enabled for the UE 102, the UE 102 generates a particular MAC-I for each of the UL data packets using the (same) integrity key and the (same) integrity protection algorithm, and also encrypts the particular UL data packet along with the particular MAC-I to generate a particular encrypted UL data packet and a particular encrypted MAC-I using the (same) encryption key and the (same) ciphering algorithm. The security-protected packet in this case includes the particular encrypted UL data packet and the particular encrypted MAC-I, and thus is both encrypted and integrity-protected.

In some implementations, the UE 102 also uses one or more parameters as an input to the at least one security function when applying one or more security functions to the UL data packets. These parameters can include a first radio bearer (RB) identity, a COUNT value associated with the UL data packets (when the data is a packet associated with a protocol that associates packets with respective counter), and/or a DIRECTION bit (e.g., 0 or 1) to indicate whether the UL data packets is traveling in the uplink direction (to the RAN 105) or in the downlink direction (from the RAN 105). In some implementations, these parameters can include an ID of the UE 102 (e.g., the *I-RNTI).* In one implementation, the UE 102 can use the ID of the UE 102 in either the integrity protection function or the encryption function, or both the integrity protection function and the encryption function.

With continued reference to Fig. 3A, the MAC controller 132 or another suitable component (e.g., an RLC controller not shown in Fig. 1A) of the DU 174 can retrieve the first UL PDU from the second UL PDU. Then, an interface controller (not shown in Fig. 1A) can send the first UL PDU to the CU 172 at event 306A or 312A. The CU 172 retrieves the security-protected packet from the first UL PDU and obtains the UL data packet from the security-protected packet. To this end, the CU 172 can apply an inverse of the security function the UE 102 used to retrieve the UL data packet from the security-protected packet, as discussed below.

In some implementations, the UE 102 (e.g., an RLC controller of the UE 102 not shown in Fig. 1A) includes the first UL PDU in another, third UL PDU when transmitting 304A, 312A the data to the DU 174. In one such implementation, the third UL PDU is an UL RLC PDU. Then the MAC controller 152 can include a MAC subheader and the third UL PDU in the second UL PDU, such that the MAC subheader is associated with the third UL PDU. To identify the third UL PDU, the MAC controller 152 of the UE 102 can include a particular logical channel identity (LCID) associated with a particular radio bearer (RB) in the MAC subheader. The CU 172 then can identify and retrieve the third UL PDU according to the MAC subheader and/or the particular LCID. The UL data packet in the first UL PDU is associated to the particular RB.

In other implementations, the UE 102 includes the first UL PDU directly in the second UL PDU. More particularly, the UE 102 can include a MAC subheader in the second UL PDU, such that the MAC subheader is associated with the first UL PDU. The UE 102 can include the particular LCID of the particular RB in the MAC subheader to identify the first UL PDU. The DU 174 then can identify and retrieve the first UL PDU according to the MAC subheader and/or the particular LCID.

In the examples above, the first UL PDU(s) or the UL data packet(s) can be associated with one or more RBs (i.e., the same RB or different RBs), one or more quality of service (QoS) flows (i.e., the same QoS flow or different QoS flows), or one or more PDU sessions (i.e., the same PDU session or different PDU sessions). In some implementations, the UE 102 receives one or more messages configuring the one or more RBs, QoS flows, or PDU sessions before event 302 and/or while the UE 102 was in the connected state. The message(s) can be RRC message(s) or NAS message(s), for example. The UE 102 can receive the message(s) from the RAN 105 (e.g., the base station 104, base station 106 or another base station) or from the CN 110 (e.g., AMF 164 or SMF 166 or MME 114) via the RAN 105. In one implementation, the RAN 105 includes one or more RB configurations (e.g., *RadioBearerConfig, DRB-ToAddMod* or *SRB-ToAddMod* information elements) for the one or more RBs in the RRC message(s). Each of the RB configuration(s) can include or configure a particular RB identity for a particular RB of the RB(s). In another implementation, a predefined RB identity (e.g., as a default value) can be specified in the corresponding standard for a particular RB of the RB(s). Further, in one implementation, the RRC message(s) can also include the particular LCID(s) for (each of) the RB(s). In another implementation, the particular LCID is a predefined or default LCID specified in the corresponding standard.

Regarding the RRC message, when the CU 172 is a CU of an ng-eNB, this message can be *RRCConnectionReconfiguration, RRCConnectonResume,* or *RRCConnectionSetup.* When the CU 172 is a CU of a gNB, the RRC message can be *RRCReconfiguration, RRCResume, RRCReestablihsment,* or *RRCSetup.* The RB(s) include SRB(s) or data RB(s).

When encryption is enabled but integrity protection is not enabled for the UE 102, the security-protected packet is an encrypted data that includes only the secured data. The CU 172 can decrypt the encrypted UL data packets to obtain the UL data packets using the (same) encryption key and the (same) ciphering algorithm (e.g., the inverse of the encryption function) the UE 102 used to encrypt the UL data packets. When encryption is not enabled but integrity protection is enabled for the UE 102, the security-protected packet can include the UL data packet along with the MAC-I. The CU 172 can verify the MAC-I for the UL data packet using the (same) integrity key and the (same) integrity algorithm that the UE 102 used to generate the MAC-I. After the CU 172 confirms that the MAC-I is valid to thereby ascertain that the security-protected packet has not been tampered with, the CU 172 retrieves the UL data packet. However, the CU 172 can discard the security-protected packet in response to determining that the MAC-I is invalid, and thus tampered with. Finally, when both encryption and integrity protection are enabled for the UE 102, the security-protected packet is a UL data packet that is both encrypted and integrity-protected, and includes encrypted UL data packet as well as the encrypted MAC-I. The CU 172 can decrypt the security-protected packet and the encrypted MAC-I to obtain the UL data packet and the MAC-I, by using the encryption key and the ciphering algorithm as discussed above. The CU 172 then can verify the MAC-I for the UL data packet using the (same) integrity key and (same) integrity algorithm. If the CU 172 confirms that the MAC-I is valid, the CU 172 obtains the data from the security-protected packet. Otherwise, if the CU 172 determines that the MAC-I is invalid, the CU 172 discards the security-protected packet because of possible tampering.

In some implementations, the CU 172 also uses one or more parameters to obtain the UL data packet from the security-protected packet, in addition to the one or more security keys and one or more security algorithms. The one or more parameters can include the first RB identity, the COUNT value associated with the data, and/or the DIRECTION bit, as discussed above. In general, the CU 172 can apply the same set of parameters as the UE 102 applied. In some implementations, these parameters can include an ID of the UE 102 (e.g., the *I-RNTI*). In one implementation, the UE 102 can use the ID of the UE 102 in either the integrity protection function or the encryption function, or both the integrity protection function and the encryption function.

As described above, the UL data packets (i.e., the UL data packet 1, UL data packet 2, ..., UL data packet N) can be associated to the RB(s). The UE 102 (e.g., the PDCP controller 154) in the inactive state may maintain a state variable TX_NEXT for each of the RB(s). The TX_NEXT indicates the COUNT value of the next UL data packet to be transmitted as described below. For each of the UL data packets associated to an RB in the RRC_INACTIVE state, the UE 102 in some implementations sets a COUNT value to the value of the TX_NEXT for the RB. In some implementations, the UE 102 can set or reset the TX_NEXT to an initial value such as zero before the event 304 or before transmitting the first UL packet at event 306. In other implementations, the UE 102 can set the first TX_NEXT counter to an initial value such as zero upon transitioning from the RRC _CONNECTED state to the RRC INACTIVE state.

For example, the UL data packets are associated to an RB and the UE 102 maintains a state variable TX_NEXT for the RB. After the UE 102 sets the COUNT value to the value of the TX_NEXT (e.g., Z) for transmission of the UL data packet 1, the UE 102 increments the value of the TX_NEXT by one (i.e., the value of the TX_NEXT is set to Z+1). The UE 102 sets the COUNT value for the UL data packet 2 to the value of the TX_NEXT (i.e., Z+1) and increments the value of the TX_NEXT by one (i.e., the value of the TX_NEXT is set to Z+2), ..., and sets the COUNT value for the UL data packet N to the value of TX_NEXT (i.e., Z+L-1) and increments the value of the TX_NEXT by one (i.e., the value of the TX_NEXT is set to Z+L). The UE 102 retains the value of the TX_NEXT before receiving 318 a second RRC release message. "Z" is the initial value of the TX_NEXT, e.g., zero.

In some implementations, the CU 172 (e.g., the PDCP controller 134) may maintain state variables RX_NEXT and/or RX_DELIV for each of the RB(s), where the UL data packets are associated, to receive the UL data packets from the UE 102 operating in the inactive state. The RX_NEXT indicates the COUNT value of the next UL data packet expected to be received, and the RX_DELIV indicates the COUNT value of the first UL data packet not delivered to the upper layers, but still waited for. The CU 172 can set or reset the RX_NEXT and/or the RX_DELIV to initial values such as zero in response to determining that the UE 102 should enter the inactive state, in response to transmitting the first RRC release message prior to the UE 102 entering the inactive state, before receiving the UL data packet 1 at event 306A, or upon receiving the UL data packet 1 at event 306. After receiving a UL data packet associated to an RB at event 306A or 312A, the CU 172 can increment the RX_NEXT for the RB by one and/or increment RX_DELIV for the RB by one. The CU 172 can use the RX_NEXT and/or the RX_DELIV to process the security-protected UL data packets associated to the RB, that CU 172 receives at events 306A and 312A as described below.

In some implementations, the CU 172 can set or reset the RX_NEXT and/or the RX_DELIV to initial values such as zero in response to transmitting the second RRC release message in similar ways as described above. Similarly, the UE 102 can set or reset the TX_NEXT to initial values such as zero after or in response to receiving the second RRC release message in similar ways as described above.

Generally speaking, to generate the security-protected packet, the UE 102 can generate and apply a new security key. For example, the CU 172 in some implementations includes a Next Hop Chaining Count value in the first RRC release message. The UE 102 and the CU 172 derive a new base station key, e.g., K_{eNB}, K_{gNB} or K_{NG-RAN*}, according to the Next Hop Chaining Count value. The CU 172 can identify the UE 102 according to UE information (e.g., the *I-RNTI*) received at event 306A, so that the CU 172 can identify the Next Hop Chaining Count value assigned to the UE 102. The UE 102 and the CU 172 can derive the one or more security keys (for example, the encryption key and/or the integrity key) from the base station key. For example, the UE 102 and the CU 172 can derive the one or more security keys from the base station key and the at least one security algorithm (e.g., the ciphering algorithm and/or the integrity protection algorithm) in accordance with the techniques specified in 3GPP TS 33.501 or 33.401. If the Next Hop Chaining Count value is a new value which the UE 102 did not receive while operating in the connected state, the UE 102 and the CU 172 can derive the base station key from a Next Hop (NH) key.

If the UE 102 received the Next Hop Chaining Count value in the RRC _CONNECTED state prior to receiving the first RRC release message, the UE 102 and the CU 172 can derive the base station key from another, second base station key (i.e., the "old" base station key). The UE 102 and the CU 172 can use the second base station key to derive at least one second security key (e.g., a second encryption key and/or a second integrity key) e.g., as specified in 3GPP TS 33.501 or 33.401. The UE 102 and the CU 172 can use the at least one second security key to exchange data packets at events 304A, 312A, 314A as described above.

In the scenarios of this disclosure, the COUNT value associated with a data packet can include a Hyper Frame Number (HFN) and a PDCP sequence number (SN). For example, if the COUNT value has a length of 32 bits, the most significant bits (MSBs) (e.g., 14 bits) of the COUNT value are the HFN and the least significant bits (LSBs) (e.g., 18 bits) of the COUNT value are the PDCP SN. The TX_NEXT in the UE 102 and the RX_NEXT in the CU 172 are of the same length as the COUNT value. For each UL data packet, the UE 102 includes the PDCP SN in a PDCP header of a UL PDCP PDU including the UL data packet. The UE 102 sets the PDCP SN to the LSBs of the TX_NEXT. After assigning or associating the PDCP SN to the UL data packet, the UE 102 increments the TX _NEXT by one.

For example, the UL data packets at events 304A and 312A are associated to an RB. The UE 102 includes a first PDCP SN associated with the UL data packet 1 in a header of the UL PDCP PDU 1 that the UE 102 transmits at event 304A. The UE 102 sets the first PDCP SN (i.e., zero) to the LSBs of the TX_NEXT after the UE 102 (re)sets the TX_NEXT to the initial value (e.g.., zero). The UE 102 increments the TX _NEXT by one after setting the first PDCP SN. The UE 102 sets the COUNT value for the UL data packet 1 to the TX_NEXT (i.e., zero). The UE 102 performs the security function(s) on the UL data packet 1 with the COUNT value to obtain the security-protected packet 1 as described above and transmits 304A to the DU 174 the initial MAC PDU including the security-protected packet 1. As described above, the CU 172 (re)sets the RX_NEXT to the initial value (e.g., zero). After receiving 306A the UL PDCP PDU 1 from the UE 102, the CU 172 can generate a COUNT value where the MSBs of the COUNT value are equal to the MSBs of the RX_NEXT, and the LSBs of the COUNT value are equal to the first PDCP SN (i.e., zero). Alternatively, the LSBs of the COUNT value can be equal to the LSBs of the RX_NEXT. Therefore, the COUNT value the CU 172 generates is the same as the COUNT value the UE 102 uses for the security-protected packet 1. The CU 172 can increment the RX_NEXT by one (i.e., the RX_NEXT is set to one) after processing the UL PDCP PDU 1.

The UE 102 includes a second PDCP SN associated with the UL data packet 2 in a header of the UL PDCP PDU 2 that the UE 102 transmits at event 312A. The UE 102 sets the second PDCP SN (i.e., one) to the LSBs of the TX_NEXT (i.e., one) and sets the COUNT value for the UL data packet 1 to the TX_NEXT (i.e., one). The UE 102 increments the TX_NEXT by one (i.e., the TX_NEXT is set to two) after setting the second PDCP SN. The UE 102 performs the security function(s) on the UL data packet 2 with the COUNT value to obtain the security-protected packet 2 as described above and transmits 312A to the CU 172 the subsequent MAC PDU including the security-protected packet 2. After receiving 312A the UL PDCP PDU 2 from the UE 102, the CU 172 can generate a COUNT value where the MSBs of the COUNT value are equal to the MSBs of the RX_NEXT, and the LSBs of the COUNT value are equal to the first PDCP SN (i.e., one). Alternatively, the LSBs of the COUNT value can be equal to the LSBs of the RX_NEXT. Therefore, the COUNT value the CU 172 generates is the same as the COUNT value the UE 102 uses for the security-protected packet 2. The CU 172 can increment the RX_NEXT by one (i.e., the RX_NEXT is set to two) after processing the UL PDCP PDU 2. For other UL data packet(s) at event 312A (i.e., the UL data packet 3... UL data packet N (if N > 2)), the UE 102 and CU 172 perform similar actions as described above, to transmit and receive 312A the other UL data packet(s), respectively.

In some scenarios and implementations, the CU 172 may receive 312A from the UE 102 the UL PDCP PDU 3 including the third PDCP SN (i.e., two) and the UL data packet 3 and receives the UL PDCP PDU 2. In this case, the CU 172 sets the RX_DELIV to two. More generally, if the CU 172 receives 306A, 312A UL PDCP PDU(s) 1, 2, ..., T, T+S, wherein S is an integer larger than 1, the CU 172 sets the RX DELIV to (T+S-1).

In some implementations, the UE 102 generates an RRC MAC-I and includes the RRC MAC-I in the UL RRC message. In one implementation, the UL RRC message in each UL MAC PDU at events 304A and 312A can be identical. For example, the UL RRC message is an *RRCResumeRequest* message and the RRC MAC-I may be in a format of an RRC information element (IE) such as a *resumeMAC-I* field. The UE 102 in these cases sets the *resumeMAC-I* to the 16 LSBs of a MAC-I. The *VarResumeMAC-Input* specifies in the input for generating the MAC-I and is ASN.1-encoded as a sequence of fields of types *sourcePhysCellId, targetCellIdentity,* and *source-c-RNTI.* In particular, the value of *sourcePhysCellId* is set to a physical cell identity (PCI) of a primary cell (PCell) to which the UE 102 was connected prior to entering the inactive state, e.g., the cell of a previously connected base station where the UE 102 receives the first RRC release message. The value of *source-c-RNTI* is set to a C-RNTI that the UE 102 had in the PCell to which it was connected prior to entering the RRC _INACTIVE state, i.e., the C-RNTI assigned by the base station 104 to the UE 102. The value of *targetCellIdentity* is set to a *cellIdentity* of the first *PLMN-Identity* included in a *PLMN-IdentityInfoList* broadcast in a *SIB1* of a cell of the DU 174, i.e., the cell (i.e., cell 124) in which the UE 102 transmit 304A the UL MAC PDU. The UE 102 calculates these bits with the "old" integrity key and the "old" integrity protection algorithm that the UE 102 most recently used in the RRC _CONNECTED state or inactive state before event 302A, and with all input bits for COUNT, BEARER, and DIRECTION set to binary ones.

In another implementation, the UL RRC message in each MAC PDU at event 304A and at event 312A can be the same RRC message (e.g., *RRCResumeRequest* message) with different contents. For example, the UE 102 includes the RRC MAC-I in the UL RRC message at event 304A as described above. Then the UE 102 includes a different RRC MAC-I in each UL RRC message at event 312A. The RRC MAC-I in each UL RRC message at event 312A is in a format of a *resumeMAC-I* field in the UL RRC message. For each UL RRC message, the UE 102 sets the *resumeMAC-I* to the 16 LSBs of a MAC-I that the UE 102 generates with the *VarResumeMAC-Input* and the UL data packet included with the UL RRC message. The UL data packet can be a security-protected packet as described above or a packet where the UE 102 has not performed the security function(s).

In other implementations, the UL RRC message transmitted at event 304A is a CCCH message and the UL RRC messages transmitted at event 312A are Dedicated Control Channel (DCCH) messages which can be the same or different. In yet other implementations, the UL RRC message transmitted at event 304A is a first CCCH message and the UL RRC messages transmitted at event 312A are second CCCH messages.

In some implementations, the UE 102 in the inactive state can perform a random access procedure with the DU 174 to transmit the UL data packet 1 at event 304A. For example, the random access procedure can be a four-step random access procedure or a two-step random access procedure. In the case of the four-step random access procedure, the UE 102 transmits a random access preamble to the base station 104 and in response, the base station 104 transmits to the UE 102 a random access response (RAR) including an uplink grant, and the UE 102 transmits 304A the UL MAC PDU in accordance with the uplink grant. The DU 174 receives 304A the UL MAC PDU in accordance with the uplink grant in the RAR. In the case of the two-step random access procedure, the UE 102 transmits 304A to the DU 174 a message A including a random access preamble and the UL MAC PDU in accordance with two-step random access configuration parameters. The UE 102 receives the two-step random access configuration parameters in system information broadcast by the DU 174 on cell 124 before transmitting 304A the UL MAC PDU. The DU 174 receives 304A the UL MAC PDU in accordance with the two-step random access configuration parameters. In other implementations, the UE 102 can transmit 304A the UL MAC PDU on radio resources configured in a preconfigured uplink grant (PUR) configuration. The CU 172 can include the PUR configuration to the UE 102 in the first RRC release message. Thus, the base station 104 receives 304A the UL MAC PDU on the radio resources.

After receiving 304A the UL MAC PDU, the DU 174 can transmit to the UE 102 one or more DCI on PDCCH(s). The DU 174 includes configuration parameters in each of the DCI(s) for the UE 102 to transmit 312A UL MAC PDU(s). Thus, the UE 102 does not (need to) perform other random access procedure(s) to transmit 312A UL MAC PDU(s). On the PDCCH(s), the DU 174 transmits each of the DCI(s) with a CRC scrambled with an ID of the UE 102. The DU 174 can derive the CRC from the DCI. In some implementations, the ID of the UE 102 can be a Radio Network Temporary Identifier (RNTI). For example, the RNTI can be a cell RNTI (C-RNTI), a temporary C-RNTI or an inactive C-RNTI. The UE 102 uses the ID to monitor the PDCCH(s) to receive the DCI(s). The configuration parameters can include new data indicator (NDI), hybrid automatic repeat request (HARQ) process number, redundancy version, frequency domain resource assignment, time domain resource assignment, etc. The UE 102 transmits 312A the UL MAC PDU in accordance with the configuration parameters. In other implementations, the UE 102 can transmit 312A the UL MAC PDU on radio resources configured in a preconfigured uplink grant (PUR) configuration. Thus, the DU 174 receives 312A the UL MAC PDU on the radio resources.

In some implementations, the UE 102 uses a first UE HARQ process to transmit 304A the UL MAC PDU. The DU 174 also uses a first DU HARQ process to receive 304A the UL MAC PDU. In some implementations, the DU 174 can include the same HARQ process number in the DCI(s) to configure the UE 102 to use a single HARQ process to transmit 312A the UL MAC PDU(s). In such cases, the UE 102 can use the first UE HARQ process or a second UE HARQ process to transmit 312A the UL MAC PDU(s) in accordance with the DCI(s) including the same HARQ process number. Similarly, the DU 174 can also use the first DU HARQ process and/or the a second DU HARQ process to receive 312A the DL MAC PDU(s). Thus, the uplink early data transmission is simplified. Both the UE 102 and DU 174 can benefit from the simplified early data transmission. In other implementations, the DU 174 enables or configures the UE 102 to use (at most) a first count of UE HARQ processes in the DCI(s) to transmit 312A the UL MAC PDU(s). In such cases, the DU 174 also uses the first count of DU HARQ processes to receive 312A the UL MAC PDU(s). In cases that the UE 102 in the connected state transmits UL MAC PDUs to the DU 174, the DU 174 enables or configures the UE 102 to use (at most) a second count of UE HARQ processes to transmit the UL MAC PDUs by transmitting DCIs to the UE 102 in similar ways described above. The UE 102 in the connected state uses (at most) the second count of UE HARQ processes to transmit the UL MAC PDUs in accordance with the DCIs. In such cases, the DU 174 also uses the second count of DU HARQ processes to receive the UL MAC PDUs from the UE operating in the connected state. In some implementation, the first count is larger than zero and the second count is larger than the first count. For example, the first count can be 1 or 2 and the second count can be 4, 6, 8 or 16. Thus, the uplink early data transmission can be simplified and the UE 102 can also benefit from power saving due to using less UE HARQ processes in the uplink early data transmission.

In some implementations, the first count is a first maximum count of HARQ processes for the uplink early data transmission and the second count is a second maximum count of HARQ processes for uplink non-early data transmission (i.e., uplink data transmission while the UE 102 is in the connected state). The first maximum count is larger than zero and the second maximum count is larger than the first maximum count. For example, the first maximum count is 1, 2 or 4 and the second maximum count is 16. In some implementations, the first or second maximum count is a fixed value specified in a 3GPP specification. Alternatively, the UE 102 can send a UE capability information (e.g., *UECapabilityInformation* message) indicating the first and/or second maximum count(s) to the RAN 105 (e.g., CU 172, base station 106 or additional base station not shown in Fig. 1A) while the UE 102 was in the connected state. The RAN 105 can send the UE capability information to the CN 110 (e.g., AMF 164 or MME 114). Thus, the CU 172 can receive the UE capability information from the UE 102 via the DU 174, from the base station 106 or the additional base station in a handover preparation or retrieve UE context procedure, or from the CN 110 during an initial context setup procedure.

After receiving 304A the UL MAC PDU or receiving the DL data packet 1, the DU 174 can transmit to the UE 102 one or more DCI on PDCCH(s). The DU 174 includes configuration parameters in each of the DCI(s) for the UE 102 to receive 314A DL MAC PDU(s) and 318A the RRC release message. On the PDCCH(s), the DU 174 transmits each of the DCI(s) with a CRC scrambled with the ID of the UE 102. The DU 174 can derive the CRC from the DCI. The UE 102 uses the ID to monitor the PDCCH(s) to receive the DCI(s). The configuration parameters can include new data indicator (NDI), hybrid automatic repeat request (HARQ) process number, redundancy version, frequency domain resource assignment, time domain resource assignment, etc. The UE 102 receives 314A the DL MAC PDU and/or 318A the RRC release message in accordance with the configuration parameters.

In some implementations, the DU 174 can use a single HARQ process to transmit 314A the DL MAC PDU(s) and 318A the DL MAC PDU including the RRC release message. Thus, the downlink early data transmission can be simplified and the UE 102 can also benefit in the implementation of the simplified early data transmission. For example, the DU 174 can include the same HARQ process number in the DCI(s) to configure the UE 102 to use a single HARQ process to receive 314A the DL MAC PDU(s) and 318A the DL MAC PDU including the RRC release message. In another example, after the DU 174 transmits 314A a DL MAC PDU and before the DU 174 receives a HARQ acknowledge (ACK) for the DL MAC PDU from the UE 102, the DU 174 refrains from transmitting 314A the next DL MAC PDU or 318A the DL MAC PDU including the RRC release message. In such cases, the UE 102 can use a single HARQ process and/or a single soft buffer to receive 314A the DL MAC PDU(s) and/or 318A the DL MAC PDU including the RRC release message in accordance with the DCI(s) including the same HARQ process number. In other implementations, the DU 174 enables or configures the UE 102 to use (at most) a third count of UE HARQ processes in the DCI(s) to receive 314A the DL MAC PDU(s) and 318A the DL MAC PDU including the RRC release message. In such cases, the DU 174 also uses the third count of DU HARQ processes to transmit 314A the DL MAC PDU(s) and 318A the DL MAC PDU including the RRC release message. In cases that the UE 102 in the connected state receives DL MAC PDUs from the DU 174, the DU 174 enables or configures the UE 102 to use (at most) a fourth count of UE HARQ processes to receive the DL MAC PDUs by transmitting DCIs to the UE 102 in similar ways described above. The UE 102 in the connected state uses (at most) the fourth count of UE HARQ processes to receive the DL MAC PDUs in accordance with the DCIs. In such cases, the DU 174 also uses the fourth count of DU HARQ processes to receive the DL MAC PDUs from the UE operating in the connected state. In some implementation, the third count is larger than zero and the fourth count is larger than the third count. For example, the third count can be 1 or 2 and the fourth count can be 4, 6, 8 or 16. Thus, the downlink early data transmission can be simplified and the UE 102 can also benefit from power saving due to using less UE HARQ processes in the downlink early data transmission. In some implementations, the first and third counts can be the same or different, and the second and fourth counts can be the same or different. In other implementations, the third count can be larger than the first count.

In some implementations, the third count is a third maximum count of HARQ processes for the downlink early data transmission and the fourth count is a fourth maximum count of HARQ processes for downlink non-early data transmission (i.e., downlink data transmission while the UE 102 is in the connected state). The third maximum count is larger than zero and the fourth maximum count is larger than the third maximum count. For example, the third maximum count is 1, 2 or 4 and the fourth maximum count is 16. In some implementations, the third or fourth maximum count is a fixed value specified in a 3GPP specification. Alternatively, the UE 102 can send a(the) UE capability information (e.g., *UECapabilityInformation* message) indicating the third and/or fourth maximum count(s) to the RAN 105 (e.g., CU 172, base station 106 or additional base station not shown in Fig. 1A) while the UE 102 was in the connected state. The RAN 105 can send the UE capability information to the CN 110 (e.g., AMF 164 or MME 114). Thus, the CU 172 can receive the UE capability information from the UE 102 via the DU 174, from the base station 106 or the additional base station in a handover preparation or retrieve UE context procedure, or from the CN 110 during an initial context setup procedure.

In some implementations, the CU 172 does not transmit a DL RRC message to the UE 102 via the DU 174 during the event 314A to response to the UL RRC message at event 304A and/or 312A. For example, the DL RRC message is an *RRCResume* message to respond to the *RRCResumeRequest* message at event 306A. In some implementations, the CU 172 can include a DL data packet in the RRC release message at event 316A. In some implementations, if the base station only has a single DL data packet (e.g., the DL data packet 1), the CU 172 can include the DL data packet 1 in the RRC release message at event 316A. In other implementations, the CU 172 can include a DL data packet in the CU to DU interface message at event 316A. In yet other implementations, the CU 172 neither includes a DL data packet in the RRC release message nor includes a DL data packet in the CU to DU interface message including the RRC release message at event 316A. If the CU 172 includes a DL data packet in the RRC release message or in the CU to DU message at event 316A, the DU 174 transmits 318A the DL data packet to the UE 102 in or with the RRC release message.

In some implementations, the CU 172 applies one or more security functions to each of the DL data packet(s) at events 314A and/or 318A in similar ways as described for the UE 102 applying the security function(s) to each of the UL data packet(s) at events 304A and 312A. Therefore, the above description for the UE 102 applying the security function(s) can apply to the CU 172 by replacing "the UE 102" and "UL" with "the CU 172" and "DL" respectively. In some implementations, the CU 172 uses a value (e.g., 1) for the DIRECTION bit, which is different from the value that the UE 102 uses in the one or more security functions.

To transmit 316A the RRC release message, the CU 172 in some implementations applies one or more security functions (e.g., encryption and/or integrity protection) to the RRC release message in similar ways as described for the UE 102 applying the security function(s) to a UL data packet at event 304A or 312A. Therefore, the above description for the UE 102 applying the security function(s) can apply to the CU 172 by replacing "UL data packet", "the UE 102" and "UL" with "the RRC release message or DL RRC message", "the CU 172" and "DL" respectively. More particularly, the CU 172 derives RRC security key(s) for applying the security function(s) to the RRC release message in similar ways as described for the UE 102 deriving the security key(s) for transmitting the UL data packets at events 304A and 312A. The UE 102 also derives the (same) RRC security key(s) as the CU 172 in similar ways as described for the UE 102 deriving and transmitting the UL data packets at events 304A and 312A. In some implementations, the UE 102 derives the RRC security key(s) after receiving the first RRC release message, before receiving 318A the RRC release message, or before, during, or after event 304A. The UE 102 applies the security function(s) (e.g., decryption and/or integrity check) with the RRC security key(s) to the received security-protected RRC release message to obtain the original RRC release message in similar ways as described for the CU 172 applying the security function(s) with the security key(s) to the security protected packet received at events 306A or 312A.

In some implementations, the UE 102 does not use the RRC security key(s) to secure the UL RRC message transmitted at event 304A. In some implementations, the UE 102 does not use the RRC security key(s) to secure the UL RRC messages transmitted at event 312A. Alternatively, the UE 102 uses the RRC security key(s) to secure the UL RRC messages transmitted at event 312A in similar ways as described for the UE 102 securing the UL data packets transmitted at events 304A or 312A. In these alternative implementations, the base station 104 uses the RRC security key(s) to apply the security function(s) (e.g., decryption and/or integrity check) to the UL RRC messages received at event 312A to obtain the original UL RRC messages in similar ways as described for the base station 104 applying the security function(s) to the UL data packets.

In some implementations, the CU 172 uses a TX_NEXT to transmit the DL data packet(s) at event 314A to the UE 102 in similar ways as described for the UE 102 using the TX_NEXT to transmit the UL data packet(s) at events 304A and 312A. Therefore, the above description for the UE 102 transmitting the UL data packet(s) at events 304A and 312A can apply to the CU 172 transmitting the DL data packet(s) at event 314A by replacing "the UE 102" and "UL" with "the CU 172" and "DL" respectively. In some implementations, the UE 102 uses a RX_NEXT and/or a RX_DELIV to receive the DL data packet(s) at event 314A in similar ways as described for the CU 172 using the RX_NEXT to receive the UL data packet(s) at events 306A and 312A. Therefore, the above description for the CU 172 receiving the DL data packet(s) at events 306A and 312A can apply to the UE 102 receiving the DL data packet(s) at event 314A by replacing "the CU 172" and "UL" with "the UE 102" and "DL" respectively.

In some implementations, the UE 102 in the inactive state 302A may receive, from the CU 172 via the DU 174, a paging message for mobile terminating early data transmission (i.e., downlink early data transmission). In response to the paging message, the UE 102 can transmit to the DU 174 a UL MAC PDU including a UL RRC message and not including a UL data packet, similar to event 304A. In turn, the DU 174 send an *Initial UL RRC Message Transfer* message including the UL RRC message to the CU 172, similar to event 306A. After transmitting the UL MAC PDU, the UE 102 does not transmit a data packet to the DU 174. After receiving the UL RRC message and verifying or validating a MAC-I in the UL RRC message, the CU 172 transmits DL MAC PDU(s) and an RRC release message to the UE 102, similar to events 314A and 316A respectively. In some implementations, the paging message can include a cause value indicating the mobile terminating early data transmission. If the UE 102 has UL data to transmit while receiving the DL MAC PDU(s) (i.e., performing DL data communication like event 314A), the UE 102 in some implementations transmits the UL data, e.g., in similar ways as described above, after receiving the RRC release message from the DU 174.

In some implementations, the DU 174 and CU 172 exchange the messages (e.g., events 306A, 308A, 310A, 316A) with one another via a Stream Control Transmission Protocol (SCTP) which is on top of an Internet Protocol (IP). In other implementations, the DU 174 and CU 172 exchange the messages (e.g., events 306A, 308A, 310A, 316A) with one another via the CP interface in accordance with a CP protocol, e.g., as specified in 3GPP specification 38.472 or 37.470.

In some implementations, the DU 174 and CU 172 communicate the data packets (e.g., events 312A, 314A) with one another via a GTP-U protocol which is on top of a User Datagram Protocol (UDP). In other implementations, the DU 174 and CU 172 communicate the data packets (e.g., events 312A, 314A) with one another via the UP interface in accordance with a UP protocol, e.g., as specified in 3GPP specification 38.474 or 37.470.

During or after the UL data communication 312A, the DU 174 in some implementations can send to the UE 102 one or more DL MAC PDUs (e.g., the DL MAC PDU(s) at event 314A or other DL MAC PDU(s)) where each includes a status PDU (e.g., RLC STATUS PDU, a PDCP Control PDU or a DL RRC message) indicating whether the DU 174 receives particular UL data packet(s) from the UE 102. In other implementations, the DU 174 does not send to the UE 102 a status PDU indicating whether the DU 174 receives particular UL data packet(s) from the UE 102.

During or after the DL data communication 314A, the UE 102 in some implementations can send to the DU 174 one or more UL MAC PDUs (e.g., the UL MAC PDU(s) at event 312A or other UL MAC PDU(s)) where each includes a status PDU (e.g., RLC STATUS PDU, a PDCP Control PDU or a UL RRC message) indicating whether the UE 102 receives particular DL data packet(s) from the DU 174. In other implementations, the UE 102 does not send to the DU 174 a status PDU indicating whether the UE 102 receives particular DL data packet(s) from the DU 174.

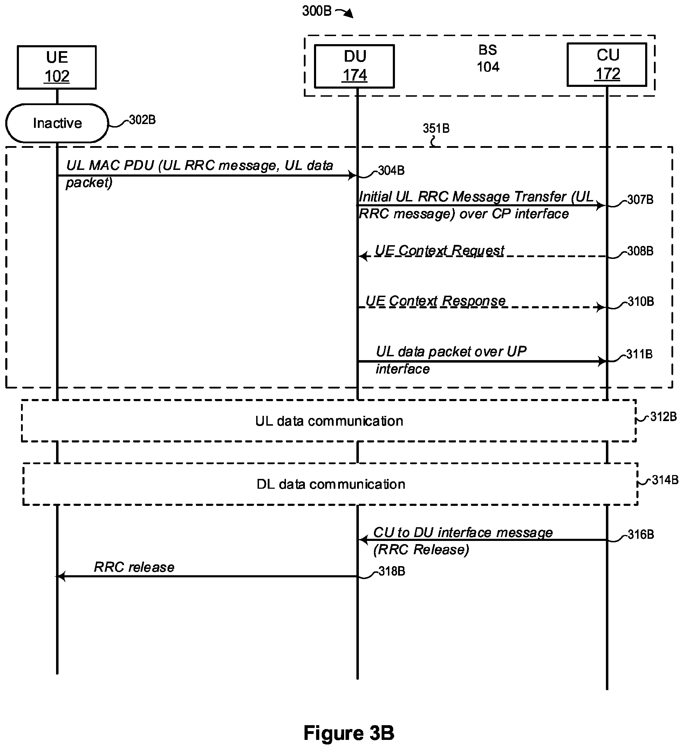

Referring next to Fig. 3B, a scenario 300B is similar to the scenario 300A. In this scenario, the base station 104 includes a CU 172 and a DU 174. Events in this scenario similar to those discussed above are labeled with the same reference numbers and the examples and implementations for Fig. 3A can apply to Fig. 3B. The differences between the scenarios of Fig. 3A and Fig. 3B are discussed below.

After receiving 304B the initial MAC PDU, the DU 174 generates an *Initial UL RRCMessage Transfer* message including the UL RRC message and sends 307B the *Initial UL RRC Message Transfer* message to the CU 172, similar to event 306A. Unlike event 306A, the DU 174 does not include the UL data packet 1 in the *Initial UL RRCMessage Transfer* message. Instead, the DU 174 sends 311B the UL data packet 1 over the UP interface. The events 304B, 307B, 308B (optional), 310B (optional) and 311B are collectively referred to in Fig. 3B as an initial UL data communication 351B.

In some implementations, the DU 174 establishes the UP interface with the CU 172 in response to the UE Context procedure (i.e., events 308B-310B). In such implementations, the DU 174 transmits 311B the UL data packet 1 over the UP interface after the UE Context procedure. In other implementations, the DU 174 can establish the UP interface prior to performing the optional UE Context procedure. For example, the DU 174 and the CU 172 can each be associated with an internet protocol (IP) address. The DU 174 can transmit 311B the UL data packet over the UP interface by transmitting the UL data packet to the IP address of the CU 172. In either case, similar to the scenario 300A, if the CU 172 detects that there is additional data to exchange with the UE 102, the CU 172 can initiate the UE Context procedure by transmitting 308B a UE Context Request message to the UE DU 174. The UE 102 can subsequently transmit 312B UL data packets to the base station 104 and/or receive 314B DL data packets from the base station 104. If the CU 172 detects that the CU 172 has a single DL data packet to transmit to the UE 102, the CU 172 can refrain from performing the UE Context procedure and can instead transmit 316B the DL data packet with the RRC release message.

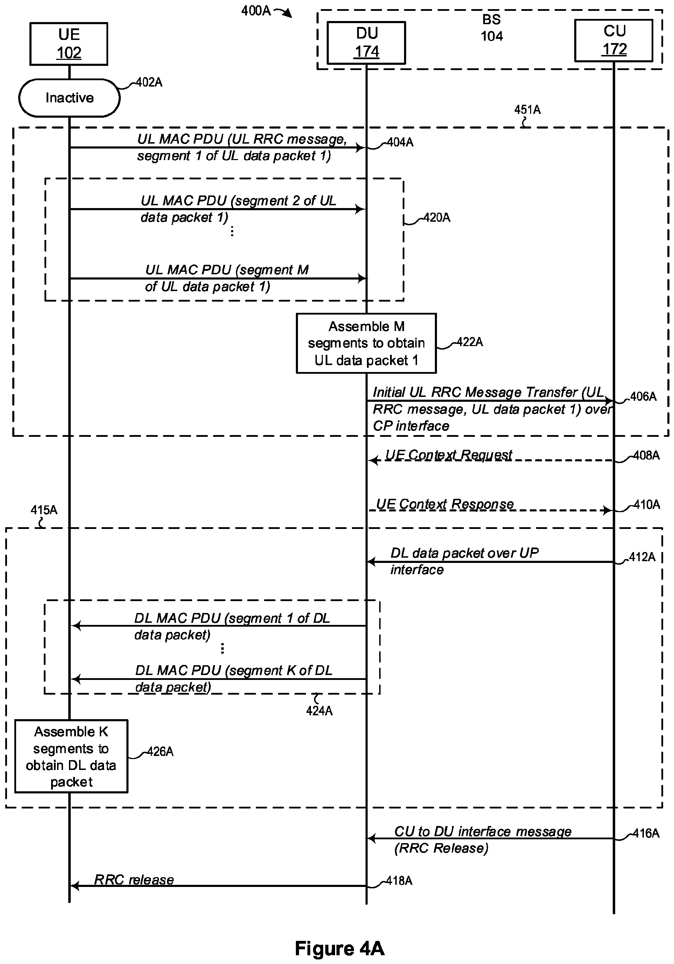

Referring now to Fig. 4A, a scenario 400A, which depicts early data transmission, is similar to scenario 300A. In the scenario 400A, the base station 104 includes a CU 172 and a DU 174. Events in this scenario similar to those discussed above are labeled with similar reference numbers and the examples and implementations for Figs. 3A-B can apply to Fig. 4A *(e.g.,* events 302A, 304A, 306A, 308A, 310A, 312A, 316A, 318A are similar to event 402A, 404A, 406A, 408A, 410A, 412A, 416A, 418A). The differences between the scenarios of Figs. 3A-3B and Fig. 4A are discussed below.

In response to or after initiating early data transmission, the UE 102 generates an initial MAC PDU, which includes a UL RRC message and segment 1 of a UL data packet 1, and transmits 404A the initial MAC PDU to the DU 174 on cell 124. The UE 102 segments the UL data packet 1 because the initial MAC PDU cannot accommodate the whole UL data packet 1. After transmitting 404A the initial MAC PDU, the UE 102 can transmit 420A subsequent MAC PDU(s) (e.g., (M-1) UL MAC PDU(s), wherein M is a natural number and larger than 1) where each includes a particular segment of the UL data packet 1 to the DU 174. After receiving the M segments of the UL data packet, the DU 174 assembles 422A the M segments to obtain the UL data packet 1 and sends 406A to the CU 172, via the CP interface, an *Initial UL RRC Message Transfer* message including the UL RRC message and the UL data packet 1. The events 404A, 420A, 422A and 406A are collectively referred to in Fig. 4A as an initial UL data communication 451A.

After receiving 406A the *Initial UL RRC Message Transfer* message, the CU 172 can send 412A a DL data packet over the UP interface to the DU 174. The DU 174 can transmit 424A to the UE 102 multiple DL MAC PDUs (e.g., K DL MAC PDUs, wherein K is a natural number and larger than 1), where each includes a particular segment of the DL data packet. The DU 174 segments the DL data packet because the DU 174 cannot transmit the whole DL data packet in a single DL MAC PDU. After the UE 102 receives the K segments, the UE 102 assembles 426A the K segments to obtain the DL data packet. The events 412A, 424A and 426A are collectively referred to in Fig. 4A as an DL data communication 415A. Alternatively, the DU 174 can send DL data packet to the UE 102 without using segmentation as in event 314A. In some scenarios and implementations, the DU 174 can receive multiple DL data packets from the CU 172. In such cases, the DU 174 can transmit some of the DL data packets as in event 314A and some of the DL data packets using segmentation as in event 415A.

The UL data packet 1 and DL data packet can be security-protected as described for Fig. 3A. The DL data communication (e.g., 415A and/or 314A) can overlap with or occur after the initial UL data communication 451A.

In some implementations, the UE 102 in the inactive state 402A may receive, from the CU 172 via the DU 174, a paging message for mobile terminating early data transmission (i.e., downlink early data transmission). In response to the paging message, the UE 102 can transmit to the DU 174 a UL MAC PDU including a UL RRC message and not including a UL data packet, similar to event 404A. In turn, the DU 174 send an *Initial UL RRC Message Transfer* message (or alternatively a DU to CU interface message as described for event 306A) including the UL RRC message to the CU 172, similar to event 406A. After transmitting the UL MAC PDU, the UE 102 neither transmits a data packet nor transmits a segment of a UL data packet to the DU 174. After receiving the UL RRC message and verifying or validating a MAC-I in the UL RRC message, the CU 172 transmits DL MAC PDU(s) and an RRC release message to the UE 102, similar to events 414A and 418A respectively. In some implementations, the paging message can include a cause value indicating the mobile terminating early data transmission. If the UE 102 has UL data to transmit while receiving the DL MAC PDU(s) (i.e., performing DL data communication like event 314A or 415A), the UE 102 in some implementations transmits the UL data, e.g., in similar ways as described above or below, after receiving the RRC release message from the DU 174.

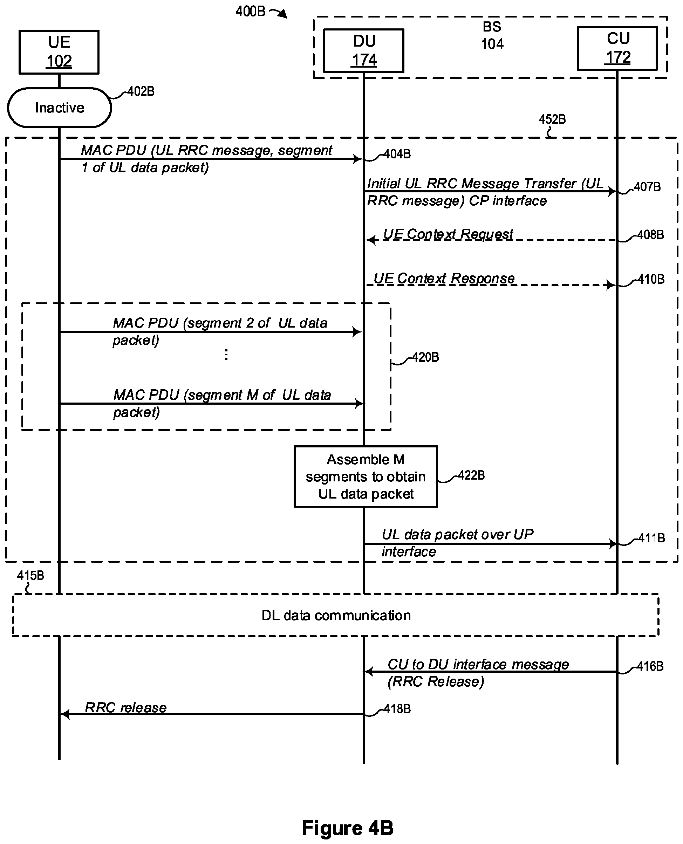

Referring next to Fig. 4B, a scenario 400B is similar to the scenarios 400A and 300A-B. In this scenario, the base station 104 includes a CU 172 and a DU 174. Events in this scenario similar to those discussed above are labeled with the same or similar reference numbers and the examples and implementations for Figs. 3A-B and 4A can apply to Fig. 4B. The differences between the scenarios of Figs. 3A-B and 4A and Fig. 4B are discussed below.

After receiving 404B the initial MAC PDU, the DU 174 generates an *Initial UL RRCMessage Transfer* message including the UL RRC message and sends 407B the *Initial UL RRC Message Transfer* message to the CU 172, similar to event 307B. Unlike event 406A, the DU 174 sends 407B the *Initial UL RRC Message Transfer* message without waiting to receive all of the segments for the UL data packet 1. After receiving 420B the M segments of the UL data packet, the DU 174 assembles 422B the M segments to obtain the UL data packet 1 and sends 411B the UL data packet 1 via the UP interface to the CU 172.

The events 404B, 407B, 408B (optional), 410B (optional), 420B, 422B and 411B are collectively referred to in Fig. 4B as an initial UL data communication 452B. The UE Context procedure (events 408B-410B) can occur before or after the events 420B and/or 422B.

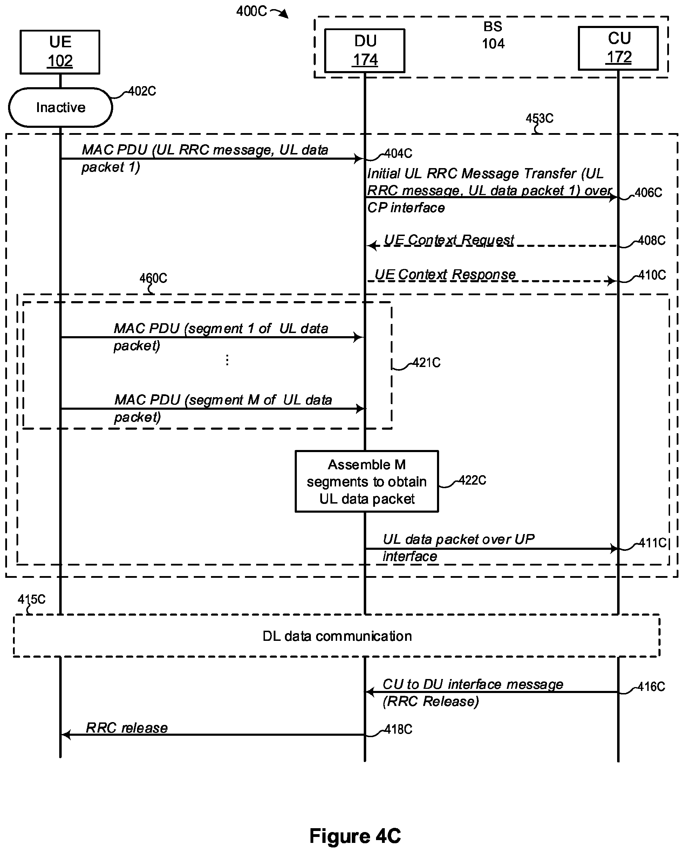

Referring next to Fig. 4C, a scenario 400C is similar to the scenarios 400A-B and 300A-B. In the scenario 400C, the base station 104 includes a CU 172 and a DU 174. Events in this scenario similar to those discussed above are labeled with the same or similar reference numbers and the examples and implementations for Figs. 3A-B and 4A-B can apply to Fig. 4C. The differences between the scenarios of Figs. 3A-B and 4A-B and Fig. 4C are discussed below.

After receiving 404C the initial MAC PDU, the DU 174 generates an *Initial UL RRCMessage Transfer* message including the UL RRC message and the UL data packet 1 and sends 406C the *Initial UL RRC Message Transfer* message to the CU 172, similar to event 306A. After transmitting 404C the initial MAC PDU, the UE 102 can transmit 421C subsequent MAC PDU(s) (e.g., M UL MAC PDU(s), wherein M is a natural number and larger than 1) where each includes a particular segment of a particular UL data packet to the DU 174. After receiving the M segments of the UL data packet, the DU 174 assembles 422A the M segments to obtain the particular UL data packet and sends 411C to the CU 172 via the UP interface, similar to event 311B. Thus, in the scenario 400C, the UE 102 transmits 404C the UL data packet 1 without using segmentation, and can subsequently transmit 421C an UL data packet to the DU 174 using segmentation.

The events 404C, 406C, 408C (optional), 410C (optional), 421C, 422C and 411C are collectively referred to in Fig. 4C as an initial UL data communication 453C. The events 421C, 422C and 411C are collectively referred to in Fig. 4C as a UL data communication 460C.

In some implementations, the UE 102 is only allowed to send a UL data packet smaller than a specific packet size in the first transmission of the early data transmission. For example, the CU 172 can indicate the specific packet size in the first RRC release message that causes the UE 102 to enter 402C the inactive state. Alternatively, the specific packet size can be specified in a 3GPP specification such as 38.331, 38.321 or 38.322. Because the UL data packet 1 is smaller than the specific packet size, the UE 102 does not segment the UL data packet 1. If the UL data packet 1 is larger than the specific size, the UE 102 refrains from segmenting the UL data packet 1 and does not include a portion of the UL data packet 1 in the UL MAC PDU that the UE 102 transmits 404C. For example, the UE 102 refrains from segmenting the UL data packet 1 because the UE 102 may not be allowed (e.g., according to the first RRC release message or in accordance with a 3GPP specification) to segment a first transmission of early data transmission. In such cases, the UE 102 transmits the UL data packet 1 after transitioning to the connected state. In other implementations, the UE 102 refrains from segmenting a UL data packet to be transmitted 404C with the UL RRC message in a UL MAC PDU. The UE 102 determines whether to include the UL data packet 1 in the UL MAC PDU in accordance with an UL grant. In cases that the UE 102 transmits a random access preamble to the DU 174, the UE 102 can receive the UL grant in a random access response from the DU 174 in response to the random access preamble. In cases that the UE 102 receives a preconfigured UL configuration configuring one or more pre-allocated UL grants, the UL grant is one of the pre-allocated UL grant(s). If the UL grant does not accommodate the UL RRC message and UL data packet 1, the UE 102 includes the UL RRC message and does not include the UL data packet 1 in the UL MAC PDU that the UE 102 transmits 404C. Otherwise, the UE 102 includes the UL RRC message and UL data packet 1 in the UL MAC PDU that the UE 102 transmits 404C.

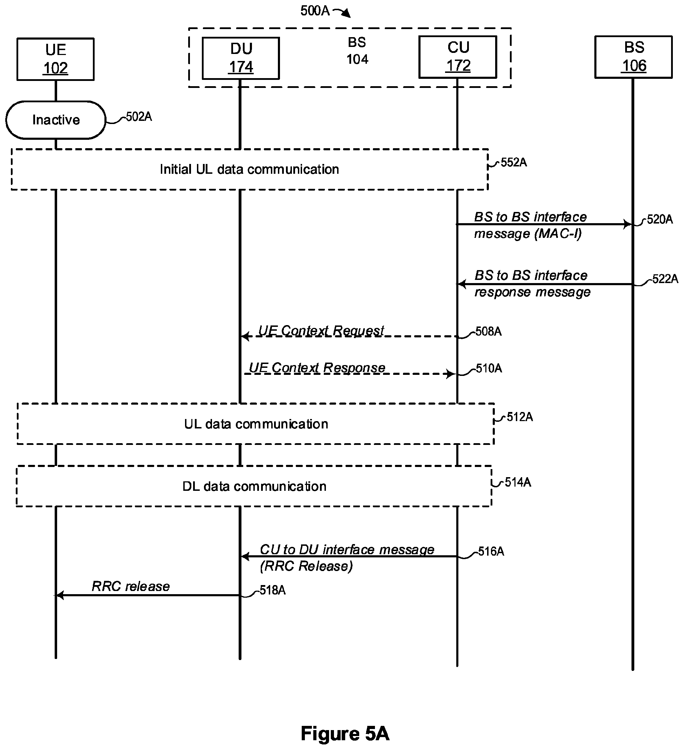

Referring next to Fig. 5A, a scenario 500A is similar to scenarios 300A-B and 400A-C. The UE 102 initially operates 502A in an inactive state with the base stations 104, 106, similar to event 302A. Later in time, the UE 102 performs 552A an initial UL data communication with the DU 174, similar to event 350A, 351B, 451A, 452B, or 453C. After the CU 172 receives the UL RRC message in the initial UL data communication 552A, the CU 172 initiates a BS to BS interface procedure (e.g., retrieve UE context procedure) with the base station 106. If the base station 106 includes a CU and a DU, the base station 106 in the following description is a CU of the base station 106. In the BS to BS interface procedure, the CU 172 sends 520A to the base station 106 a BS to BS interface message (e.g., *Retrieve UE Context Request* message) including an RRC MAC-I that the CU 172 retrieves from the UL RRC message. In some implementations, the CU 172 can include the UL data packet 1 in the BS to BS interface message. In other implementations, the CU 172 sends to the base station 106 the UL data packet 1 via a UP interface (e.g., Xn-U interface) between the CU 172 and the base station 106. The base station 106 can perform security function(s) to decrypt and/or check integrity of the UL data packet 1 to obtain the original UL data packet 1. After obtaining the original UL data packet 1, the base station 106 sends the original UL data packet 1 to the CN 110 or edge server. In yet other implementations, the CU 172 does not send the UL data packet 1 to the base station 106.

In response to the BS to BS interface message, the base station 106 can send a BS to BS interface response message (e.g., *Retrieve UE Context Response* message) including UE context information of the UE 102 to the CU 172. Thus, the CU 172 can derive security key(s) from the UE context information and apply security function(s) (e.g., decryption and/or integrity check) with the security key(s) to the UL data packet(s) in UL data communication 512A in similar ways as described above. The CU 172 also applies security function(s) (e.g., encryption and/or integrity protection) with the security key(s) to the DL data packet(s) in the DL data communication 514A in similar ways as described above. The event 512A can be similar to the events 312A and/or 460C. The event 514A can be similar to the events 314A and/or 415A.

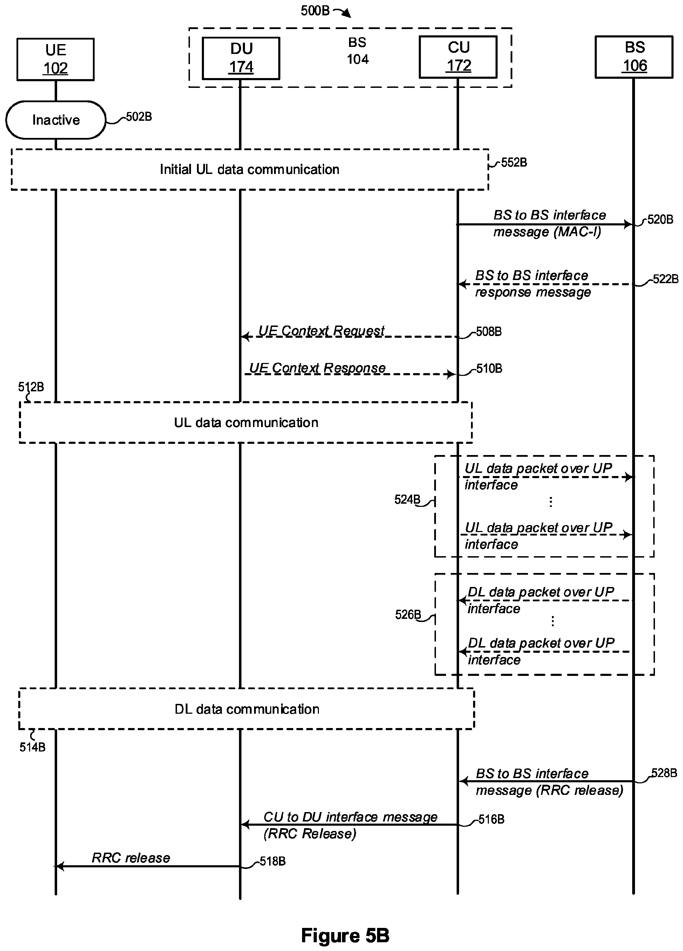

Referring next to Fig. 5B, a scenario 500B is similar to the scenario 500A. In this scenario, the base station 104 includes a CU 172 and a DU 174. Events in this scenario similar to those discussed above are labeled with the same or similar reference numbers and the examples and implementations for Figs. 3A and 5A can apply to Fig. 5B. The differences between the scenarios of Figs. 3A and 5A and Fig. 5B are discussed below.

In response to the BS to BS interface message 520B, the base station 106 can send 522B a BS to BS interface response message not including UE context information of the UE 102 to the CU 172. Thus, the CU 172 has no UE context information of the UE 102 to derive security key(s). Instead, the base station 106 derives security key(s) from the UE context information of the UE 102. In some implementations, the BS to BS interface message 522B can be a *Retrieve UE Context Failure* message, an existing XnAP message or a new XnAP message. Alternatively, the base station 106 does not send the BS to BS interface response message to the CU 172.

After performing the initial UL data communication 552B, the CU 172 performs 512B the UL data communication to receive UL data packet(s) from the UE 102 and sends 524B the UL data packet(s) to the base station 106 via the UP interface (e.g., Xn-U interface). Depending on the implementation, the CU 172 can transmit the UL data packet 1 to the base station 106 at event 520B or event 524B. The base station 106 applies security function(s) with the security key(s) to the UL data packet(s) to obtain the original UL data packet(s) in similar ways as described above. The base station 106 can send the original UL data packets(s) to the CN 110 or edge server. After receiving 520B the BS to BS interface message, the base station 106 can receive DL data packet(s) from the CN 110 or edge server. The base station 106 also applies security function(s) (e.g., encryption and/or integrity protection) with the security key(s) to the DL data packet(s) and sends 526B the security protected DL data packet(s) to the CU 172 via the UP interface. In turn, the CU 172 performs 514B the DL data communication to send the DL data packet(s) to the UE 102.

In some implementations, after a (second) certain period of data inactivity, the base station 106 can determine that neither the base station 106 nor the UE 102 has transmitted any data in the downlink direction or the uplink direction, respectively, during the second certain period. In response to the determination, the base station 106 can send 528B a BS to BS interface message including an RRC release message to the CU 172, which in turn sends 516B a CU to DU interface message including the RRC release message to the DU 174. Then, the DU 174 sends 518B a DL MAC PDU including the RRC release message to the UE 102. The CU 172 does not apply security function(s) to the RRC release message and the base station 106 applies security function(s) (i.e., integrity protection and encryption) to the RRC release message as described above for the CU 172 in Fig. 3A.

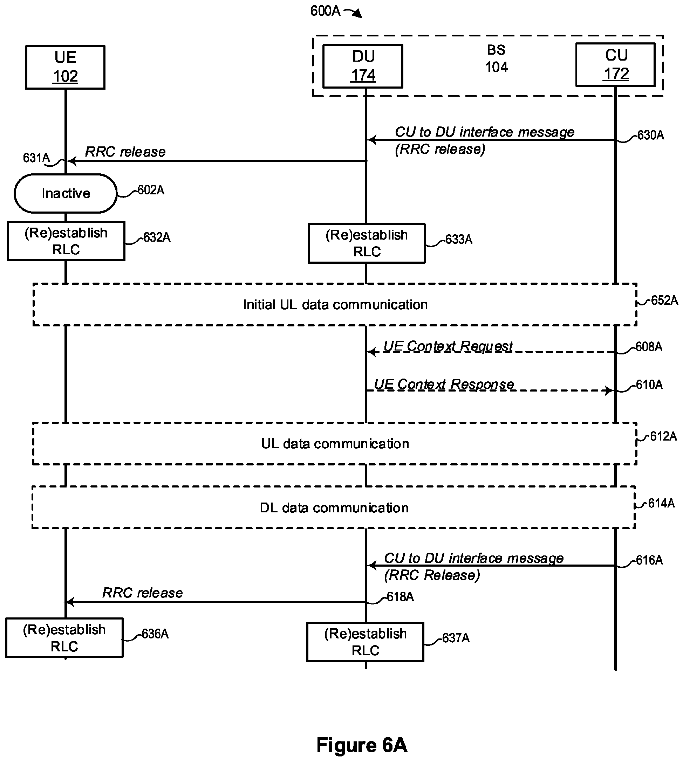

Referring next to Fig. 6A, a scenario 600A is similar to the scenarios 300A-B, 400A-C and 500A-B. In this scenario, the base station 104 includes a CU 172 and a DU 174. Events in this scenario similar to those discussed above are labeled with similar reference numbers and the examples and implementations for Figs. 3A-B, 4A-C and 5A-B can apply to Fig. 6A. The differences between the scenarios of Figs. 3A-B, 4A-C and 5A-B and Fig. 6A are discussed below.

Before event 602A, the UE 102 was in a connected state. Then, the CU 172 can send 630A a CU to DU interface message including a (first) RRC release message to the DU 174 for the UE 102. In turn the DU 174 transmits 631A the first RRC release message to the UE 102. The CU 172 determines to transmit the first RRC release message due to detecting data inactivity for the UE 102 as described above. In response to or after receiving the first RRC release message, the UE 102 (e.g., an RLC controller of the UE 102) reestablishes 632A one or more RLC entity or entities for one or more RBs (e.g., SRB(s) or DRB(s)). In response to the reestablishment, the UE 102 sets RLC state variables to initial values for the RLC entity or entities, e.g., in accordance with 3GPP specification 38.322. In some implementations, the RB(s) are RB(s) via which the UE 102 in the connected state communicated data with the DU 174 and the CU 172. In some implementations, the UE 102 can reestablish the RLC entity or entities upon or before initiating 652A the initial UL data communication. Similarly, the DU 174 (e.g., an RLC controller of the DU 174) reestablishes 633A one or more RLC entity or entities for the RB(s) in response to or after receiving 630A the CU to DU interface message. In response to the reestablishment, the DU 174 sets RLC state variables to initial values for the RLC entity or entities, e.g., in accordance with 3GPP specification 38.322. In some implementations, the DU 174 can reestablish the RLC entity or entities upon or before receiving the UL RRC message and/or UL data packet 1 in the initial UL data communication at event 652A, similar to event 304A, 304B, 404A, 420A, 422A, 404B, 420B, 422B, 404C, 421C or 422C.

In other implementations, the UE 102 can release the RLC entity or entities in response to or after receiving the first RRC release message. At a later time, when the UE 102 in the inactive state initiates early data transmission (i.e., initial UL data transmission 652A or DL data transmission 614A) for transmitting UL data packet(s) or receiving DL data packet(s), the UE 102 establishes 632A one or more new RLC entity or entities and initializes RLC state variables for the new RLC entity or entities in response to the establishment. Similarly, the DU 174 (e.g., an RLC controller of the DU 174) can release the RLC entity or entities for the RB(s) in response to or after receiving 630A the CU to DU interface message. At a later time, when the DU 174 receives the UL MAC PDU in the initial UL data communication 652A, the DU 174 establishes 633A one or more new RLC entity or entities and initializes RLC state variables for the new RLC entity or entities in response to the establishment.

After (re)establishing 632A, 633A the (new) RLC entity or entities, the UE 102 and the DU 174 can perform 652A an initial UL data communication (similar to event 350A, 351B, 451A, 452B or 453C), 612A a UL data communication (similar to event 312A or 460C) and/or 614A a DL data communication (similar to events 314A or 415A) to communicate UL data packets and/or DL data in accordance with an RLC protocol. For example, by operating the RLC state variable(s) after setting the RLC state variables to the initial values, the UE 102 can start sequence numbering for RLC PDU(s) including the UL data packet(s) or RLC PDU segment(s) including segments of different UL data packets from 0 in the initial UL data communication 652A and the UL data communication 612A. By operating the RLC state variable(s) after setting the RLC state variables to the initial values, the DU 174 can start sequence numbering for RLC PDU(s) including the DL data packet(s) or RLC PDU segment(s) including segments of different DL data packets from 0 in the DL data communication 614A. The RLC PDU segments including segments of the same UL data packet have the same sequence number.

In response to or after receiving 618A a (second) RRC release message, the UE 102 (e.g., the RLC controller of the UE 102) in some implementations can reestablish 636A one or more (new) RLC entity or entities associated to one or more radio bearers via which the UE 102 communicates the UL data packet(s) 612A and/or the DL data packets 614A with the DU 174, in similar ways as described above. Similarly, the DU 174 (e.g., the RLC controller of the DU 174) can reestablish 637A the RLC entity or entities for the RB(s) in response to or after receiving 616A the CU to DU interface message.

Alternatively, the UE 102 can release the RLC entity or entities in response to or after receiving the RRC release message 618A. At a later time, when the UE 102 in the inactive state initiates early data transmission for transmitting UL data packet(s) or receiving DL data packet(s) (similar to events 652A, 612A and/or 614A), the UE 102 establishes 636A one or more new RLC entity or entities and initializes RLC state variables for the new RLC entity or entities in response to the establishment. Similarly, the DU 174 (e.g., the RLC controller of the DU 174) can release the RLC entity or entities for the RB(s) in response to or after receiving 616A the CU to DU interface message. At a later time, when the DU 174 receives the UL MAC PDU in the initial UL data communication (similar to event 652A), the DU 174 establishes 637A one or more new RLC entity or entities and initializes RLC state variables for the new RLC entity or entities in response to the establishment.

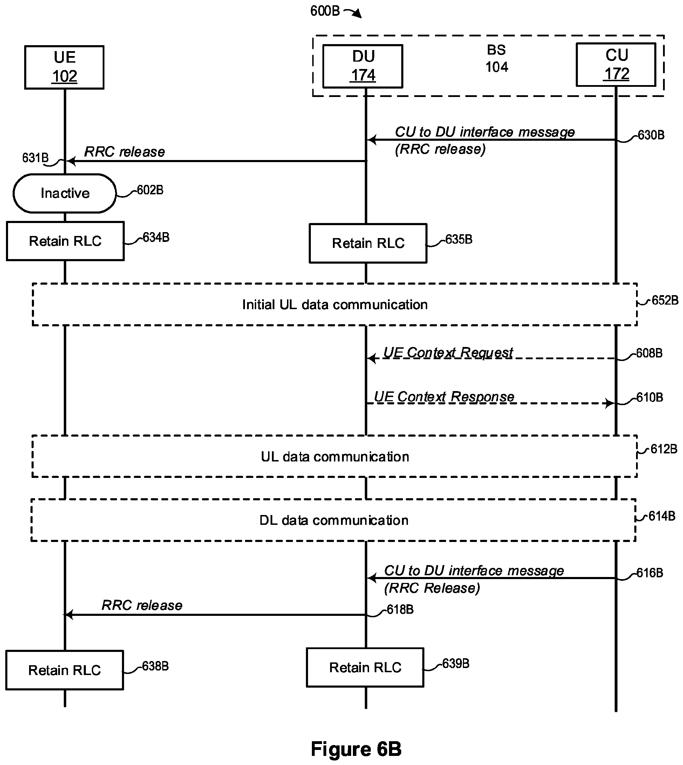

Referring next to Fig. 6B, a scenario 600B is similar to the scenario 600A. Instead of reestablishing the RLC entity or entities, or releasing and establishing the RLC entity or entities, the UE 102 and DU 174 retain 634B, 635B, 638B, 639B the RLC entity or entities, i.e., including retaining the RLC state variables for the RLC entity or entities. In other words, the UE 102 continues to use the RLC entity and entities and operate or maintain the RLC state variables in (initial) UL data communications and DL data communications, before or after receiving RRC release message(s) (e.g., the first RRC release message and/or the second RRC release message). For example, the UE 102 can start sequence numbering for RLC PDU(s) including the UL data packet(s) from the last sequence number used while operating in the connected state, rather than starting sequence numbering from zero. Similarly, the DU 174 continues to use the RLC entity and entities and operate or maintain the RLC state variables in (initial) UL data communications and DL data communications, before or after receiving the CU to DU information message(s) (e.g., the CU to DU information message(s) 630B, 616B).

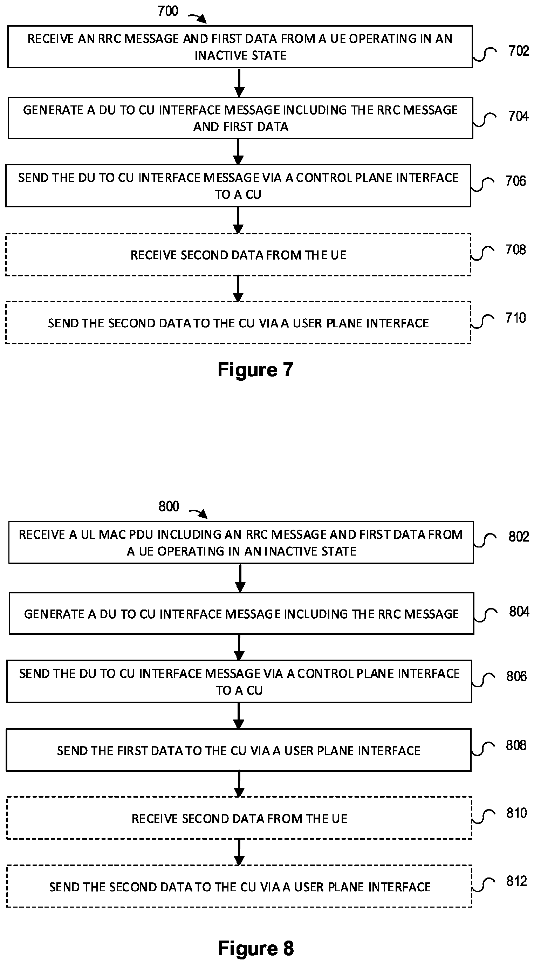

Next, several example methods that can be implemented in the UE or in one or more base stations to support communications in the inactive state are discussed next with reference to Figs. 7-26.

Fig. 7 is a flow diagram of an example method 700 for sending an RRC message and UL data received from a UE operating in an inactive state associated with a protocol for controlling radio resources, which can be implemented in a DU (e.g., the DU 174), for example.

At block 702, the DU receives an RRC message and first data from a UE operating in an inactive state (e.g., events 304A, 304B, 404A, 404B, 404C, 552A, 552B, 652A, 652B). At block 704, the DU generates a DU to CU interface message including the RRC message and first data (e.g., events 306A, 406A, 406C, 552A, 552B, 652A, 652B). At block 706, the DU sends the DU to CU interface message via a control plane interface to a CU (e.g., events 306A, 406A, 406C, 552A, 552B, 652A, 652B). At block 708, the DU receives second data from the UE (e.g., events 312A, 312B, 421C, 512A, 612A). At block 710, the DU sends the second data to the CU via a user plane interface (e.g., events 312A, 312B, 411C, 512A, 612A).

Fig. 8 is a flow diagram of an example method 800 for sending an RRC message and UL data received from a UE operating in an inactive state associated with a protocol for controlling radio resources, which can be implemented in a DU (e.g., the DU 174), for example.

At block 802, the DU receives a UL MAC PDU including an RRC message and first data from a UE operating in an inactive state (e.g., events 304A, 304B, 404A, 404B, 404C, 552A, 552B, 652A, 652B). At block 804, the DU generates a DU to CU interface message including the RRC message (e.g., events 307B, 407B, 552A, 552B, 652A, 652B). At block 806, the DU sends the DU to CU interface message via a control plane interface to a CU (e.g., events 307B, 407B, 552A, 552B, 652A, 652B). At block 808, the DU sends the first data to the CU via a user plane interface (e.g., events 311B, 411B, 552A, 552B, 652A, 652B). At block 810, the DU receives second data from the UE (e.g., events 312B, 512A, 612A). At block 812, the DU sends the second data to the CU via a user plane interface (e.g., events 312B, 512A, 612A).

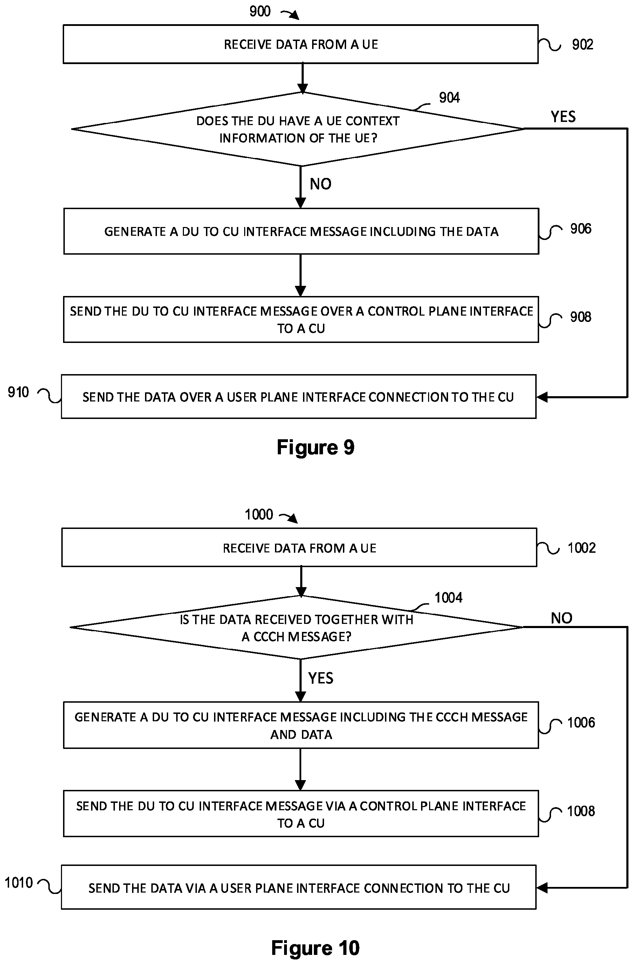

Fig. 9 is a flow diagram of an example method 900 for sending UL data received from a UE operating in an inactive state associated with a protocol for controlling radio resources, which can be implemented in a DU (e.g., the DU 174), for example.

At block 902, the DU receives data from the UE (e.g., events 304A, 304B, 404A, 404B, 404C, 552A, 552B, 652A, 652B). After receiving the data, the DU determines whether the DU has a UE context information of the UE, at block 904. If the DU at block 904 does not have a UE context information of the UE, the DU generates a DU to CU interface message including the data, at block 906 (e.g., events 306A, 406A, 406C, 552A, 552B, 652A, 652B). At block 908, the DU sends the DU to CU interface message over a control plane interface to a CU. If the DU at block 904 has a UE context information of the UE, the DU sends the data over a user plane interface connection to the CU, at block 910 (e.g., events 312A, 311B, 312B, 411B, 411C, 552A, 552B, 652A, 652B).

Fig. 10 is a flow diagram of an example method 1000 for sending UL data received from a UE operating in an inactive state associated with a protocol for controlling radio resources, which can be implemented in a DU (e.g., the DU 174), for example.

At block 1002, the DU receives data from the UE (e.g., events 304A, 304B, 404A, 404B, 404C, 552A, 552B, 652A, 652B). After receiving the data, the DU determines whether the data is received together with a CCCH message. If the DU at block 1004 determines that the data is received together with a CCCH message, the DU generates a DU to CU interface message including the CCCH message and data, at block 1006 (e.g., events 306A, 406A, 406C, 552A, 552B, 652A, 652B). At block 1008, the DU sends the DU to CU interface message via a control plane interface to a CU (e.g., events 306A, 406A, 406C, 552A, 552B, 652A, 652B). If the DU at block 1004 determines that the data is not received together with a CCCH message, the DU sends the data via a user plane interface connection to the CU, at block 1010 (e.g., events 312A, 311B, 312B, 411B, 411C, 552A, 552B, 652A, 652B).

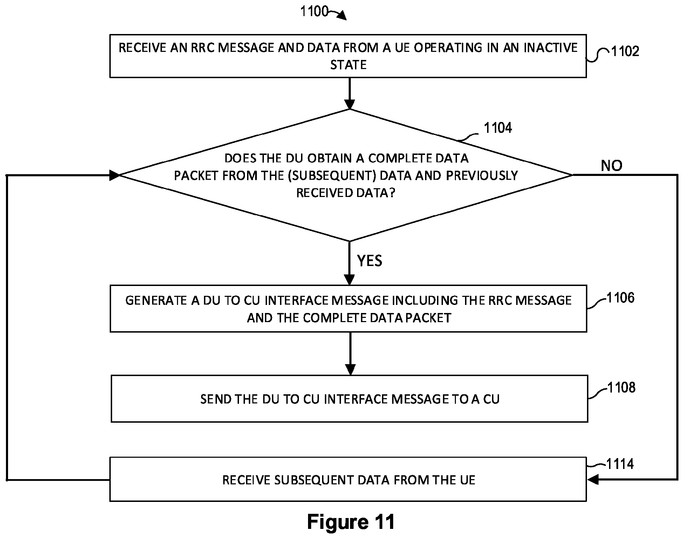

Fig. 11 is a flow diagram of an example method 1100 for sending an RRC message and UL data received from a UE operating in an inactive state associated with a protocol for controlling radio resources, which can be implemented in a DU (e.g., the DU 174), for example.

At block 1102, the DU receives an RRC message and data from a UE operating in an inactive state (e.g., events 304A, 304B, 404A, 404B, 552A, 552B, 652A, 652B). After receiving the data, the DU determines whether the DU obtains a complete data packet from the (subsequent) data and previously received data, at block 1104. If the DU at block 1104 obtains a complete data packet from the (subsequent) data and previously received data, the DU generates a DU to CU interface message including the RRC message and the complete data packet, at block 1106 (e.g., events 422A, 406A, 552A, 552B, 652A, 652B). At block 1108, the DU sends the DU to CU interface message to a CU (e.g., event 406A, 552A, 552B, 652A, 652B). If the DU at block 1105 does not obtain a complete data packet from the subsequent data and previously received data, the DU at block 1114 receives subsequent data from the UE and the flow proceeds to block 1104 (e.g., events 420A).

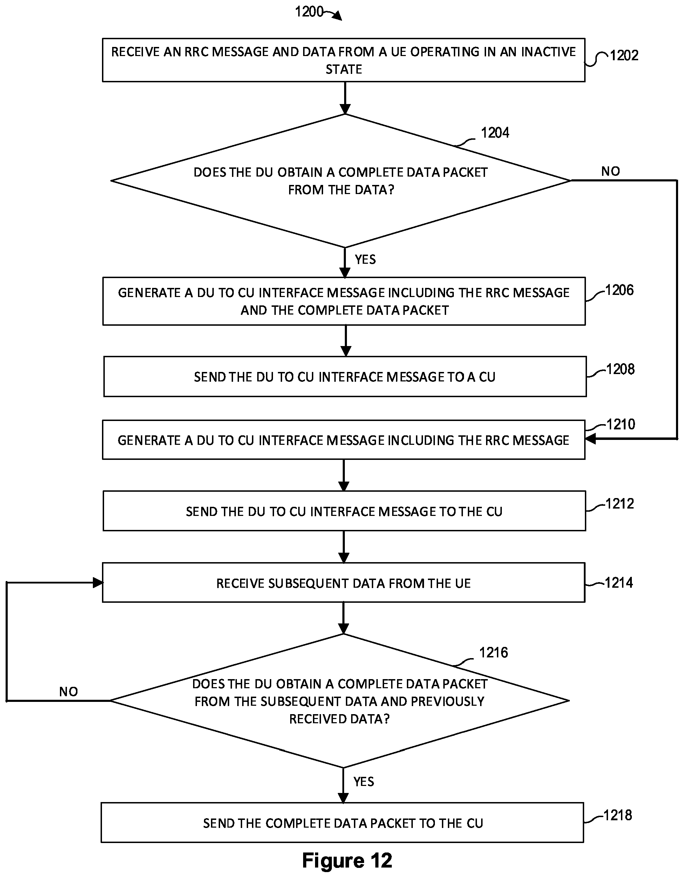

Fig. 12 is a flow diagram of an example method 1200 for sending an RRC message and UL data received from a UE operating in an inactive state associated with a protocol for controlling radio resources, which can be implemented in a DU (e.g., the DU 174), for example.

At block 1202, the DU receives an RRC message and data from a UE operating in an inactive state (e.g., events 304A, 304B, 404A, 404B, 552A, 552B, 652A, 652B). After receiving the data, the DU determines whether the DU obtains a complete data packet from the data, at block 1204. If the DU obtains a complete data packet from the data at block 1204, the DU generates a DU to CU interface message including the RRC message and the complete data packet, at block 1206 (e.g., events 422A, 406A, 552A, 552B, 652A, 652B). At block 1208, the DU sends the DU to CU interface message to a CU (e.g., event 406A, 552A, 552B, 652A, 652B). If the DU at block 1204 does not obtain a complete data packet from the data, the DU at block 1210 generates a DU to CU interface message including the RRC message (e.g., event 407B, 552A, 552B, 652A, 652B). At block 1212, the DU sends the DU to CU interface message to the CU (e.g., event 407B, 552A, 552B, 652A, 652B). At block 1214, the DU receives subsequent data from the UE (e.g., 420A). After receiving the subsequent data, the DU determines whether the DU obtains a complete data packet from the subsequent data and previously received data, at block 1216. If the DU obtains a complete data packet from the subsequent data and previously received data, the DU sends the complete data packet to the CU, at block 1218 (e.g., events 312A, 312B, 411B, 411C, 512A, 512B, 612A, 612B). If the DU at block 1216 does not obtain a complete data packet from the subsequent data and previously received data, the flow proceeds to block 1214.

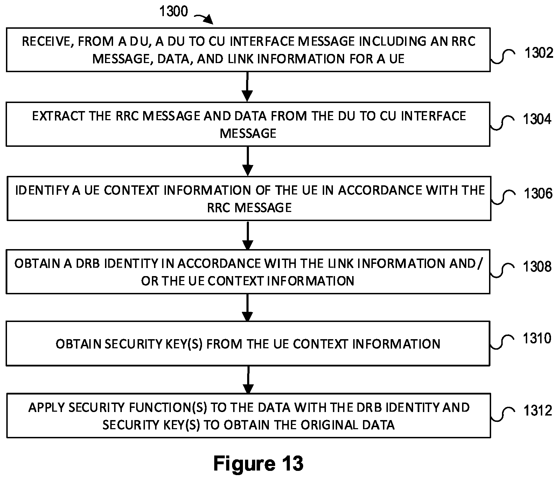

Fig. 13 is a flow diagram of an example method 1300 for receiving UL data received from a UE operating in an inactive state associated with a protocol for controlling radio resources, which can be implemented in a CU (e.g., the CU 172), for example.

At block 1302, the CU receives from a DU a DU to CU interface message including an RRC message, data, and link information for a UE (e.g., events 306A, 406A, 406C, 552A, 552B, 652A, 652B). At block 1304, the CU extracts the RRC message and data from the DU to CU interface message (e.g., events 306A, 406A, 406C, 552A, 552B, 652A, 652B). At block 1306, the CU identifies a UE context information of the UE in accordance with the RRC message. At block 1308, the CU obtains a DRB identity in accordance with the link information and/or the UE context information. At block 1310, the CU obtains security key(s) from the UE context information. At block 1312, the CU applies security function(s) to the data with the DRB identity and security key(s) to obtain the original data.

In some implementations, the link information includes a logical channel identity associated to the received data. The DU receives the logical channel identity with the received data in a UL MAC PDU and transmits the logical channel identity to the CU in the DU to CU interface message. The CU can determine the DRB identity in accordance with stored information indicating the logical channel identity that is associated with the DRB identity. In other implementations, the link information includes radio bearer information (e.g., the DRB identity) associated to the received data. The DU receives a logical channel identity with the received data in a UL MAC PDU. The DU can determine the DRB identity in accordance with stored information indicating the logical channel identity that is associated with the DRB identity, and the DU can transmit the DRB identity to the CU in the DU to CU interface message. In still other implementations, the CU can determine the DRB identity based on the UE context information. For example, if the UE context information indicates a single DRB, then the CU can identify the DRB identity associated with the single DRB.

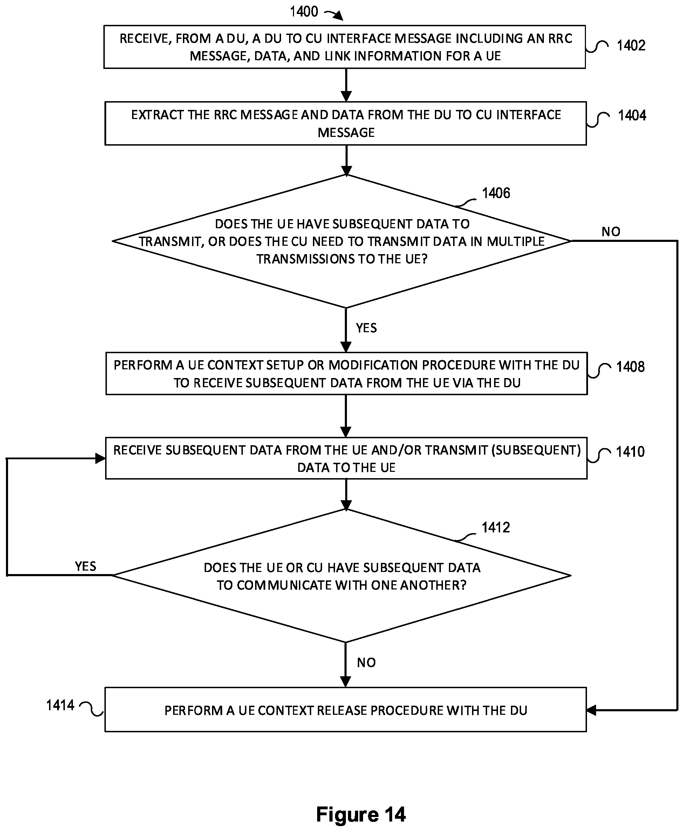

Fig. 14 is a flow diagram of an example method 1400 for receiving UL data received from a UE operating in an inactive state associated with a protocol for controlling radio resources, which can be implemented in a CU (e.g., the CU 172), for example.

At block 1402, the CU receives from a DU a DU to CU interface message including an RRC message, data, and link information for a UE (e.g., events 306A, 406A, 406C, 552A, 552B, 652A, 652B). At block 1404, the CU extracts the RRC message and data from the DU to CU interface message (e.g., events 306A, 406A, 406C, 552A, 552B, 652A, 652B). After receiving RRC message and data, the CU determines whether the UE has subsequent data to transmit, or the CU needs to transmit data in multiple transmissions to the UE, at block 1406. If the CU at block 1406 determines that the UE has subsequent data to transmit, or the CU needs to transmit data to the UE in multiple transmissions, the CU performs a UE Context Setup or Modification procedure with the DU to receive subsequent data from the UE via the DU, at block 1408 (e.g., events 308A, 310A, 308B, 310B, 408A, 410A, 408B, 410B, 408C, 410C, 508A, 510A, 508B, 510B, 608A, 610A, 608B, 610B). At block 1410, the CU receives subsequent data from the UE and/or transmits (subsequent) data to the UE (events 312A, 314A, 312B, 314B, 420B, 415B, 421C, 415C, 512A, 514A, 512B, 514B, 612A, 614A, 612B, 614B). After receiving the subsequent data, the CU determines whether the UE or CU has subsequent data to communicate with one another at block 1412. If the CU at block 1412 determines that the UE or CU does not have subsequent data to communicate with one another, the CU performs a UE Context Release procedure with the DU, at block 1414 (e.g., 316A, 316B, 416A, 416B, 416C, 516A, 516B, 616A, 616B). If the CU at block 1412 determines that the UE or CU has subsequent data to communicate with one another, then the flow proceeds to block 1410. If the CU at block 1406 determines that the UE does not have subsequent data to transmit, or the CU does not need to transmit data in multiple transmissions to the UE (i.e., the CU has no data to transmit to the UE or the CU has one data packet to transmit to the UE), then the flow proceeds to block 1414. If the CU determines at block 1406 that the CU has one data packet to transmit to the UE, the CU can transmit the data packet to the DU during the UE Context Release procedure at block 1414.

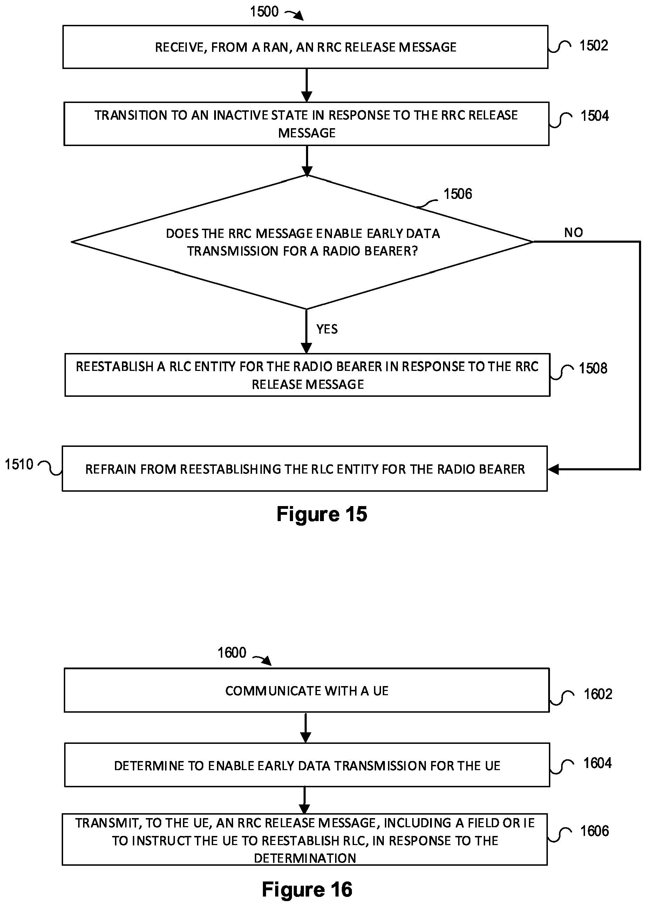

Fig. 15 is a flow diagram of an example method 1500 for whether to reestablish an RLC entity for early data transmission with a RAN, which can be implemented in a UE (e.g., the UE 102), for example.

At block 1502, the UE receives from the RAN an RRC release message (e.g., events 318A, 318B, 418A, 418B, 418C, 518A, 518B, 618A, 618B). At block 1504, the UE transitions to an inactive state in response to the RRC release message. The UE at block 1506 determines whether the RRC message enables early data transmission for a radio bearer. If the UE determines that the RRC message enables early data transmission for a radio bearer, the UE reestablishes an RLC entity for the radio bearer in response to the RRC release message, at block 1508 (e.g., event 632A). If the UE at block 1506 determines that the RRC message does not enable early data transmission for a radio bearer, the UE at block 1510 refrains from reestablishing the RLC entity for the radio bearer.

Fig. 16 is a flow diagram of an example method 1600 for early data communication with a UE operating in an inactive state associated with a protocol for controlling radio resources, which can be implemented in a RAN node such as a CU (e.g., the CU 172) or a base station (e.g., the base station 104, 106), for example.

At block 1602, the RAN node communicates with a UE. At block 1604, the RAN node determines to enable early data transmission for the UE. At block 1606, the RAN node transmits to the UE an RRC release message, including a field or IE to instruct the UE to reestablish RLC, in response to the determination (e.g., events 318A, 318B, 418A, 418B, 418C, 518A, 518B, 618A, 618B).

In some implementations, the UE reestablishes an RLC entity as described for event 632A. In other implementations, the CU or base station can indicate a particular RLC entity associated to a radio bearer (e.g., DRB) in the field or IE. In such cases, the UE reestablishes the particular RLC entity in accordance with the indication in the field or IE.

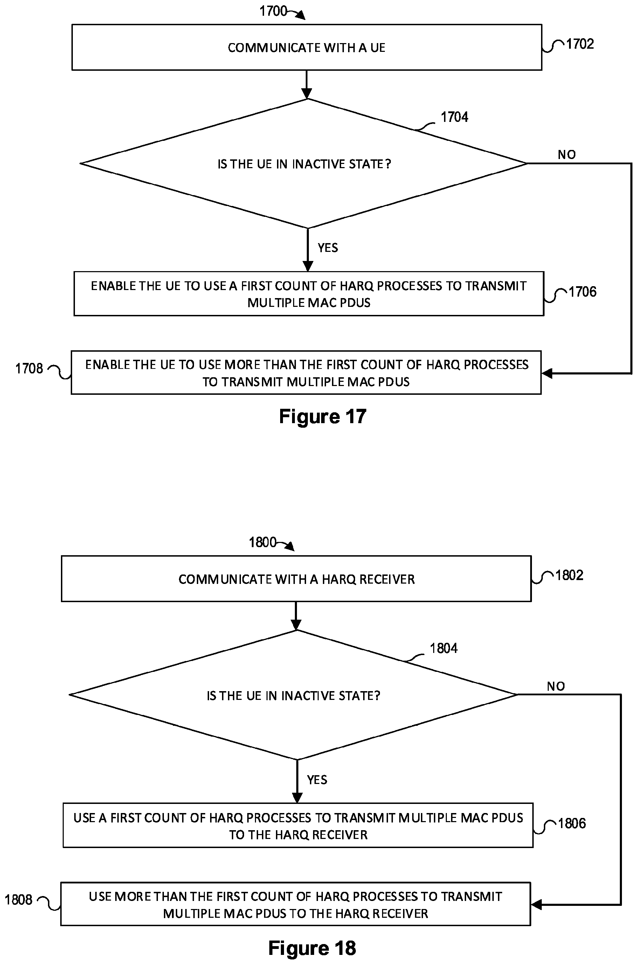

Fig. 17 is a flow diagram of an example method 1700 for data communication with a UE, which can be implemented in RAN node such as a DU (e.g., the DU 174) or a base station (e.g., the base station 104, 106), for example.

At block 1702, the RAN node communicates with a UE (e.g., events 350A, 351B, 451A, 452B, 453C, 552A, 512A, 514A, 552B, 512B, 514B, 652A, 612A, 614B, 652B, 612B, 614B). After communicating, the RAN node determines whether the UE is in an inactive state, at block 1704. If the RAN node determines that the UE is in the inactive state, the RAN node enables the UE to use a first count of HARQ processes to transmit multiple MAC PDUs, at block 1706 (e.g., events 350A, 351B, 451A, 452B, 453C, 552A, 512A, 552B, 512B, 652A, 612A, 652B, 612B). If the RAN node determines that the UE is not in the inactive state, the RAN node enables the UE to use more than the first count of HARQ processes to transmit multiple MAC PDUs, at block 1708.

Fig. 18 is a flow diagram of an example method 1800 for data communication between a HARQ transmitter and a HARQ receiver, which can be implemented in a HARQ transmitter. In some implementations, the HARQ transmitter is a RAN node such as a DU (e.g., the DU 174) or a base station (e.g., the base station 104, 106), and the HARQ receiver is a UE (e.g., the UE 102). For example, the RAN node may be transmitting downlink data to the UE. In other implementations, the HARQ transmitter is a UE, and the HARQ receiver is a RAN node. In such implementations, the UE may be transmitting uplink data to the RAN node.

At block 1802, the HARQ transmitter communicates with a HARQ receiver (e.g., events 350A, 351B, 451A, 452B, 453C, 552A, 512A, 514A, 552B, 512B, 514B, 652A, 612A, 614B, 652B, 612B, 614B). While communicating with the HARQ receiver, the HARQ transmitter determines whether the UE is in an inactive state, at block 1804. For example, if the UE is the HARQ transmitter, then the UE determines whether the UE is in the inactive state (e.g., events 302A, 302B, 402A, 402B, 402C, 502A, 502B, 502C, 602A, 602B). If the UE is the HARQ receiver, then the HARQ transmitter (i.e., the RAN node) determines whether the UE is in the inactive state. If the HARQ transmitter determines that the UE is in an inactive state, the HARQ transmitter uses a first count of HARQ processes to transmit multiple MAC PDUs to the HARQ receiver, at block 1806 (e.g., events 314A, 314B, 424A, 514A, 514B, 614A, 614B if the HARQ transmitter is the RAN node, or events 350A, 351B, 451A, 452B, 453C, 552A, 512A, 552B, 512B, 652A, 612A, 652B, 612B if the HARQ transmitter is the UE). If the HARQ transmitter determines that the UE is not in the inactive state, the HARQ transmitter uses more than the first count of HARQ processes to transmit multiple MAC PDUs to the HARQ receiver, at block 1808.

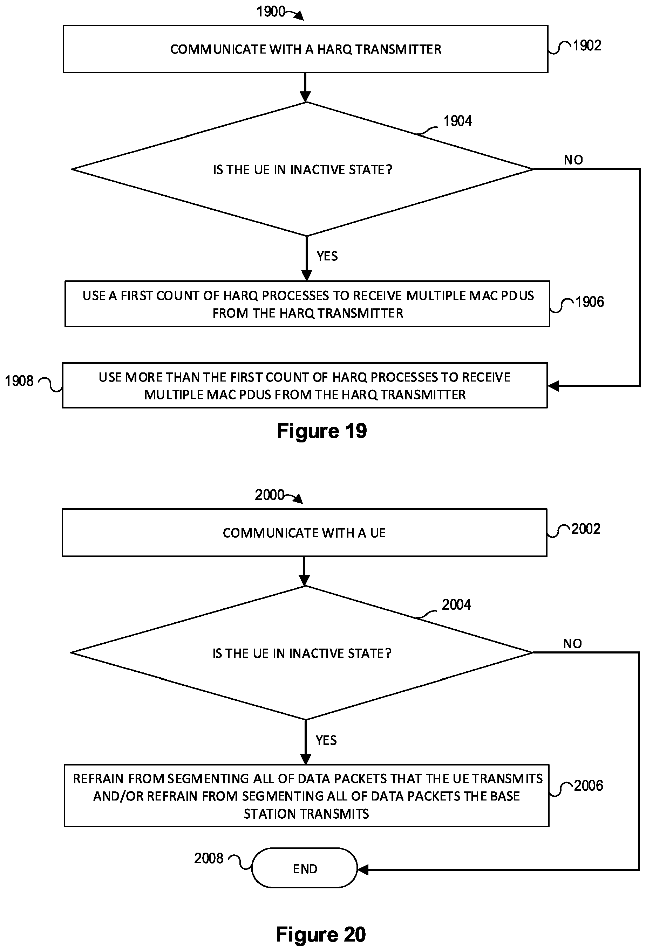

Fig. 19 is a flow diagram of an example method 1900 for data communication between a HARQ transmitter and a HARQ receiver, which can be implemented in a HARQ receiver. Similar to Fig. 18, in some implementations, the HARQ transmitter is a RAN node such as a DU or a base station, and the HARQ receiver is a UE. In other implementations, the HARQ transmitter is a UE, and the HARQ receiver is a RAN node.

At block 1902, the HARQ receiver communicates with a HARQ transmitter (e.g., events 350A, 351B, 451A, 452B, 453C, 552A, 512A, 514A, 552B, 512B, 514B, 652A, 612A, 614B, 652B, 612B, 614B). While communicating with the HARQ transmitter, the HARQ receiver determines whether the UE is in an inactive state, at block 1904. If the UE is the HARQ receiver, then the UE determines whether the UE is in the inactive state (e.g., events 302A, 302B, 402A, 402B, 402C, 502A, 502B, 502C, 602A, 602B). If the UE is the HARQ transmitter, then the HARQ receiver (i.e., the RAN node) determines whether the UE is in the inactive state.

If the HARQ receiver determines that the UE is in the inactive state, the HARQ receiver uses a first count of HARQ processes to receive multiple MAC PDUs from the HARQ transmitter, at block 1906 (e.g., events 314A, 314B, 424A, 514A, 514B, 614A, 614B if the HARQ receiver is the UE, or events 350A, 351B, 451A, 452B, 453C, 552A, 512A, 552B, 512B, 652A, 612A, 652B, 612B if the HARQ receiver is the base station). If the HARQ receiver determines that the UE is not in inactive state, the HARQ receiver uses more than the first count of HARQ processes to receive multiple MAC PDUs from the HARQ transmitter, at block 1908.

Fig. 20 is a flow diagram of an example method 2000 for data communication with a UE operating in an inactive state associated with a protocol for controlling radio resources, which can be implemented in a base station (e.g., the base station 104, 106), for example.

At block 2002, the base station communicates with a UE (e.g., events 350A, 351B, 451A, 452B, 453C, 552A, 512A, 514A, 552B, 512B, 514B, 652A, 612A, 614B, 652B, 612B, 614B). While communicating with the UE, the base station determines whether the UE is in an inactive state, at block 2004. If the base station determines that the UE is in the inactive state, the BS refrains from segmenting all of data packets that the UE transmits and/or refrains from segmenting all of data packets the base station transmits, at block 2006. If the base station determines that the UE is not in the inactive state, the flow ends, at block 2008.

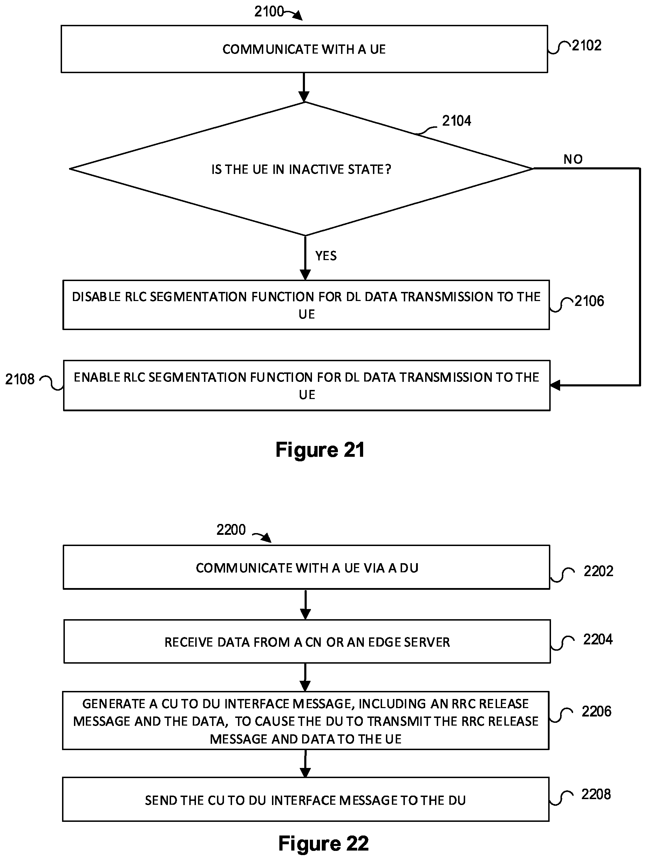

Fig. 21 is a flow diagram of an example method 2100 for data communication with a UE, which can be implemented in a base station (e.g., the base station 104, 106), for example.

At block 2102, the base station communicates with a UE (e.g., events 350A, 351B, 451A, 452B, 453C, 552A, 512A, 514A, 552B, 512B, 514B, 652A, 612A, 614B, 652B, 612B, 614B). While communicating with the UE, the BS determines whether the UE is in an inactive state, at block 2104. If the BS determines that the UE is in the inactive state, the BS disables RLC segmentation function for DL data transmission to the UE, at block 2106. If the BS determines that the UE is not in the inactive state, the BS enables RLC segmentation function for DL data transmission to the UE, at block 2108.

Fig. 22 is a flow diagram of an example method 2200 for early data transmission with a UE operating in an inactive state associated with a protocol for controlling radio resources, which can be implemented in a CU (e.g., the CU 172), for example.

At block 2202, the CU communicates with a UE via a DU (e.g., 350A, 312A, 314A, 351B, 312B, 314B, 451A, 415A, 452B, 415B, 453C, 415C, 552A, 512A, 514A, 552B, 512B, 514B, 652A, 612A, 614A, 652B, 612B, 614B). At block 2204, the CU receives data from a CN or an edge server. At block 2206, the CU generates a CU to DU interface message, including an RRC release message and the data, to cause the DU to transmit the RRC release message and data to the UE (e.g., events 316A, 316B, 416A, 416B, 516A, 516B, 616A, 616B). At block 2208, the CU sends to the DU the CU to DU interface message (e.g., events 316A, 316B, 416A, 416B, 516A, 516B, 616A, 616B).

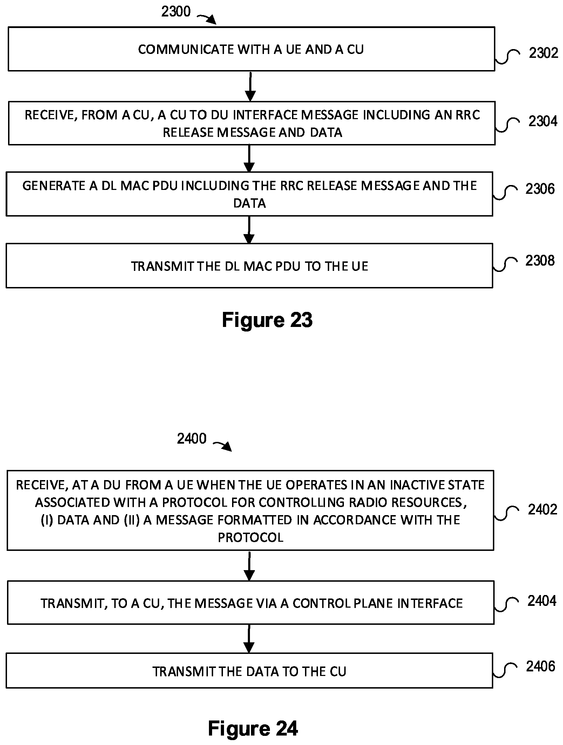

Fig. 23 is a flow diagram of an example method 2300 for early data transmission with a UE operating in an inactive state associated with a protocol for controlling radio resources, which can be implemented in a DU (e.g., the DU 174), for example.

At block 2302, the DU communicates with a UE and a CU (e.g., 350A, 312A, 314A, 351B, 312B, 314B, 451A, 415A, 452B, 415B, 453C, 415C, 552A, 512A, 514A, 552B, 512B, 514B, 652A, 612A, 614A, 652B, 612B, 614B). At block 2304, the DU receives from a CU a CU to DU interface message including an RRC release message and data (e.g., events 316A, 316B, 416A, 416B, 516A, 516B, 616A, 616B). At block 2306, the DU generates a DL MAC PDU including the RRC release message and the data (e.g., events 318A, 318B, 418A, 418B, 518A, 518B, 618A, 618B). At block 2308, the DU transmits the DL MAC PDU to the UE (e.g., events 318A, 318B, 418A, 418B, 518A, 518B, 618A, 618B).

Fig. 24 is a flow diagram of an example method 2400 for managing early transmission, which can be implemented in a DU (e.g., the DU 174) of a distributed base station (e.g., the base station 104 or 106). At block 2402, the DU receives, from a UE (e.g., the UE 102) when the UE operates in an inactive state associated with a protocol for controlling radio resources, (i) data and (ii) a message formatted in accordance with the protocol (e.g., events 304A, 304B, 404A, 404B, 552A, 552B, 652A, 652B). At block 2404, the DU transmits, to a CU (e.g., the CU 172) of the distributed base station, the message via a control plane interface (e.g., events 306A, 307B, 406A, 407B, 406C, 552A, 552B, 652A, 652B). At block 2406, the DU transmits the data to the CU (e.g., events 306A, 311B, 406A, 411B, 406C, 552A, 552B, 652A, 652B).

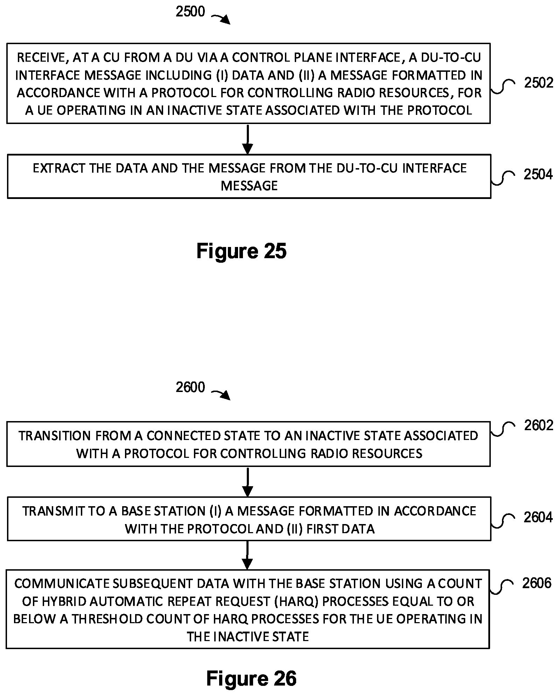

Fig. 25 is a flow diagram of an example method 2500 for managing early transmission, which can be implemented in a CU (e.g., the CU 172) of a distributed base station (e.g., the base station 104 or 106). At block 2502, the CU receives, from a DU (e.g., the DU 174) via a control plane interface, a DU-to-CU interface message including (i) data and (ii) a message formatted in accordance with a protocol for controlling radio resources, for a UE (e.g., the UE 102) operating in an inactive state associated with the protocol (e.g., events 306A, 406A, 406C, 552A, 552B, 652A, 652B). At block 2504, the CU extracts the data and the message from the DU-to-CU interface message.

Fig. 26 is a flow diagram of an example method 2600 for managing early transmission, which can be implemented in a UE (e.g., the UE 102). At block 2602, the UE transitions from a connected state to an inactive state associated with a protocol for controlling radio resources (e.g., events 302A, 302B, 402A, 402B, 402C, 502A, 502B, 602A, 602B). At block 2604, the UE transmits to a base station (i) a message formatted in accordance with the protocol and (ii) first data (e.g., events 304A, 304B, 404A, 404B, 552A, 552B, 652A, 652B) At block 2606, the UE communicates subsequent data with the base station using a count of HARQ processes equal to or below a threshold count of HARQ processes for the UE operating in the inactive state (e.g., events 312A, 314A, 312B, 314B, 415A, 415B, 460C, 512A, 514A, 512B, 514B, 612A, 614A, 612B, 614B).

The following additional considerations apply to the foregoing discussion.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an intemet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method implemented by a distributed unit, DU, (174) of a distributed base station for managing early data transmission, the method comprising:
receiving (304A), by the DU (174) from a user equipment, UE, (102) operating in an inactive state associated with a protocol for controlling radio resources, (i) first data and (ii) a message formatted in accordance with the protocol;
transmitting (307B), by the DU (174) to a central unit, CU, (172) of the distributed base station, the message via a control plane interface;
transmitting (311B), by the DU (174), the first data to the CU (172) via a user plane interface after transmitting the message;
receiving, from the UE (102) operating in the inactive state, second data after transmitting the message to the CU (172); and
transmitting, by the DU (174), the second data to the CU (172) via the user plane interface.

2. The method of claim 1, further comprising, after the transmitting (307B) the message via the control plane interface:
performing a UE context setup procedure or a UE context modification procedure with the CU (172); and
transmitting (311B) the first data to the CU via the user plane interface in response to the performing.

3. The method of claim 1 or 2, wherein:
receiving (304A) the first data includes:
receiving (404A) a first segment of an UL data packet with the message and
receiving the second data includes subsequently receiving (420A) one or more remaining segments of the UL data packet; and
the method further comprises assembling (422A) the first segment and the one or more remaining segments to obtain the UL data packet; and transmitting (307B) the message includes:
transmitting (407B) the message after receiving the first segment and prior to assembling the first segment and the one or more remaining segments.

4. The method of any one of the preceding claims, wherein:
receiving (304A) the first data includes receiving the first data in a first transmission having a first hybrid automatic repeat request, HARQ, process number; and
receiving the second data includes receiving the second data in a second transmission having the first HARQ process number.

5. The method of any one of the preceding claims, further comprising:
receiving, by the DU (174) from the CU (172), third data over the user plane interface after transmitting the first data to the CU (172); and
transmitting, by the processing hardware, the third data to the UE (102).

6. The method of any one of the preceding claims, further comprising:
configuring, by the DU (174), the UE (102)to use a count of HARQ processes equal to or below a threshold count to transmit a plurality of uplink data packets when the UE (102) operates in the inactive state.

7. The method of any one of claims 1-5, further comprising:
receiving, by the DU (174) from the CU (172) over the user plane interface, a plurality of downlink data packets;
determining, by the DU (174), a threshold count of HARQ processes based on UE capability information; and
transmitting, by the DU (174), the plurality of downlink data packets to the UE (102) using a count of HARQ processes equal to or below the threshold count.

8. The method of any one of the preceding claims, wherein receiving (i) the first data and (ii) the message includes receiving an uplink transmission including the first data with the message.

9. The method of any one of the preceding claims, wherein transmitting the message includes transmitting the message in an *Initial UL RRC Message Transfer* message.

10. A distributed unit, DU, (174) of a distributed base station including processing hardware (130) and configured to implement a method according to any one of the preceding claims.

## Patentansprüche

1. Verfahren, das durch eine verteilte Einheit (distributed unit, DU) (174) einer verteilten Basisstation zum Verwalten einer früheren Datenübertragung implementiert wird, wobei das Verfahren Folgendes umfasst:
Empfangen (304A) (i) erster Daten und (ii) einer gemäß dem Protokoll formatierten Nachricht durch die DU (174) von einem Benutzergerät (user equipment, UE) 102, das in einem inaktiven Zustand, der einem Protokoll zum Steuern von Funkressourcen zugeordnet ist, betrieben wird;
Übertragen (307B) der Nachricht über eine Steuerungsebenenschnittstelle durch die DU (174) an eine zentrale Einheit (central unit, CU) (172) der verteilten Basisstation;
Übertragen (311B) der ersten Daten an die CU (172) über eine Benutzerebenenschnittstelle nach dem Übertragen der Nachricht durch die DU (174);
Empfangen zweiter Daten nach dem Übertragen der Nachricht an die CU (172) von dem UE (102), das in dem inaktiven Zustand betrieben wird; und
Übertragen der zweiten Daten an die CU (172) über die Benutzerebenenschnittstelle durch die DU (174).

2. Verfahren nach Anspruch 1, nach dem Übertragen (307B) der Nachricht über die Steuerungsebenenschnittstelle ferner umfassend:
Durchführen einer UE-Kontext-Einrichtungsprozedur oder einer UE-Kontext-Änderungsprozedur mit der CU (172); und
Übertragen (311B) der ersten Daten an die CU über die Benutzerebenenschnittstelle als Reaktion auf das Durchführen.

3. Verfahren nach Anspruch 1 oder 2, wobei:
Empfangen (304A) der ersten Daten Folgendes beinhaltet:
Empfangen (404A) eines ersten Segments eines UL-Datenpakets mit der Nachricht und Empfangen der zweiten Daten nachfolgendes Empfangen (420A) eines oder mehrerer verbleibender Segmente des UL-Datenpakets beinhaltet; und
das Verfahren ferner Zusammenfügen (422A) des ersten Segments und des einen oder der mehreren restlichen Segmente zum Erlangen des UL-Datenpakets umfasst; und
Übertragen (307B) der Nachricht Folgendes beinhaltet:
Übertragen (407B) der Nachricht nach dem Empfangen des ersten Segments und vor dem Zusammenfügen des ersten Segments und des einen oder der mehreren restlichen Segmente.

4. Verfahren nach einem der vorhergehenden Ansprüche, wobei:
das Empfangen (304A) der ersten Daten das Empfangen der ersten Daten in einer ersten Übertragung beinhaltet, die eine erste hybride automatische Wiederholungsanforderung-Prozessanzahl (hybrid automatic repeat request, HARQ) aufweist; und
das Empfangen der zweiten Daten das Empfangen der zweiten Daten in einer zweiten Übertragung beinhaltet, die die erste HARQ-Prozessnummer aufweist.

5. Verfahren nach einem der vorhergehenden Ansprüche, ferner umfassend:
Empfangen dritter Daten über die Benutzerebenenschnittstelle nach dem Übertragen der ersten Daten an die CU (172) durch die DU (174) von der CU (172); und
Übertragen der dritten Daten durch die Verarbeitungshardware an das UE (102).

6. Verfahren nach einem der vorhergehenden Ansprüche, ferner umfassend:
Konfigurieren des UE (102) zum Verwenden einer Anzahl von HARQ-Prozessen, die einem Schwellenwert entspricht oder darunter liegt, um eine Vielzahl von Uplink-Datenpaketen zu übertragen, wenn das UE (102) in dem inaktiven Zustand betrieben wird, durch die DU (174) .

7. Verfahren nach einem der Ansprüche 1-5, ferner umfassend:
Empfangen einer Vielzahl von Downlink-Datenpaketen durch die DU (174) von der CU (172) über Benutzerebenenschnittstelle;
Bestimmen einer Schwellenwertanzahl von HARQ-Prozessen basierend auf UE-Fähigkeitsinformationen, durch die DU (174); und
Übertragen der Vielzahl von Downlink-Datenpaketen an das UE (102) unter Verwendung einer Anzahl von HARQ-Prozessen, die dem Schwellenwert entspricht oder darunter liegt, durch die DU (174).

8. Verfahren nach einem der vorhergehenden Ansprüche, wobei das Empfangen (i) der ersten Daten und (ii) der Nachricht das Empfangen einer Uplink-Übertragung beinhaltet, die die ersten Daten mit der Nachricht beinhaltet.

9. Verfahren nach einem der vorhergehenden Ansprüche, wobei das Übertragen der Nachricht das Übertragen der Nachricht in einer *Initial-UL-RRC-Message-Transfer-*Nachricht beinhaltet.

10. Verteilte Einheit (DU) (174) einer verteilten Basisstation, die Verarbeitungshardware (130) beinhaltet und dazu konfiguriert ist, ein Verfahren nach einem der vorhergehenden Ansprüche zu implementieren.

## Revendications

1. Procédé mis en œuvre par une unité distribuée, DU, (174) d'une station de base distribuée pour gérer une transmission de données précoce, le procédé comprenant :
la réception (304A), par la DU (174) en provenance d'un équipement utilisateur, UE, (102) fonctionnant dans un état inactif associé à un protocole de contrôle de ressources radio, (i) de premières données et (ii) d'un message formaté conformément au protocole ;
l'émission (307B), par la DU (174) à une unité centrale, CU, (172) de la station de base distribuée, du message par l'intermédiaire d'une interface de plan de contrôle ;
l'émission (311B), par la DU (174), des premières données à la CU (172) par l'intermédiaire d'une interface de plan utilisateur après l'émission du message ;
la réception, en provenance de l'UE (102) fonctionnant dans l'état inactif, de deuxièmes données après l'émission du message à la CU (172) ; et
l'émission, par la DU (174), des deuxièmes données à la CU (172) par l'intermédiaire de l'interface de plan utilisateur.

2. Procédé selon la revendication 1, comprenant également, après l'émission (307B) du message par l'intermédiaire de l'interface de plan de contrôle :
la réalisation d'une procédure de configuration de contexte UE ou d'une procédure de modification de contexte UE avec la CU (172) ; et
l'émission (311B) des premières données à la CU par l'intermédiaire de l'interface de plan utilisateur en réponse à l'exécution.

3. Procédé selon la revendication 1 ou 2, dans lequel :
la réception (304A) des premières données comporte :
la réception (404A) d'un premier segment d'un paquet de données UL avec le message et la réception des deuxièmes données comporte la réception (420A) ultérieure d'un ou de plusieurs segments restants du paquet de données UL ; et
le procédé comprend également l'assemblage (422A) du premier segment et des un ou plusieurs segments restants pour obtenir le paquet de données UL ; et
l'émission (307B) du message comporte :
l'émission (407B) du message après la réception du premier segment et avant l'assemblage du premier segment et des un ou plusieurs segments restants.

4. Procédé selon l'une quelconque des revendications précédentes, dans lequel :
la réception (304A) des premières données comporte la réception des premières données dans une première transmission ayant un premier numéro de processus de demande de répétition automatique hybride, HARQ ; et
la réception des deuxièmes données comporte la réception des deuxièmes données dans une seconde transmission ayant le premier numéro de processus HARQ.

5. Procédé selon l'une quelconque des revendications précédentes, comprenant également :
la réception, par la DU (174) en provenance de la CU (172), de troisièmes données sur l'interface de plan utilisateur après la transmission des premières données à la CU (172) ; et
l'émission, par le matériel de traitement, des troisièmes données à l'UE (102).

6. Procédé selon l'une quelconque des revendications précédentes, comprenant également :
la configuration, par la DU (174), de l'UE (102) pour utiliser un nombre de processus HARQ égal ou inférieur à un nombre seuil pour transmettre une pluralité de paquets de données de liaison montante lorsque l'UE (102) fonctionne dans l'état inactif.

7. Procédé selon l'une quelconque des revendications 1 à 5, comprenant également :
la réception, par la DU (174) en provenance de la CU (172) sur l'interface de plan utilisateur, d'une pluralité de paquets de données de liaison descendante ;
la détermination, par la DU (174), d'un nombre seuil de processus HARQ sur la base des informations de capacité de l'UE ; et
l'émission, par la DU (174), de la pluralité de paquets de données de liaison descendante à l'UE (102) à l'aide d'un nombre de processus HARQ égal ou inférieur au nombre seuil.

8. Procédé selon l'une quelconque des revendications précédentes, dans lequel la réception (i) des premières données et (ii) du message comporte la réception d'une émission de liaison montante comportant les premières données avec le message.

9. Procédé selon l'une quelconque des revendications précédentes, dans lequel l'émission du message comporte l'émission du message dans un message de *transfert de message UL RRC initial.*

10. Unité distribuée, DU, (174) d'une station de base distribuée comportant un matériel de traitement (130) et configurée pour mettre en œuvre un procédé selon l'une quelconque des revendications précédentes.
